(19) Europäisches Patentamt / European Patent Office / Office européen des brevets

(11) **EP 4 515 049 B1**

(12) **EUROPEAN PATENT SPECIFICATION**

(45) Date of publication and mention
of the grant of the patent:
**15.04.2026 Bulletin 2026/16**

(21) Application number: **23725097.2**

(22) Date of filing: **28.04.2023**

(51) International Patent Classification (IPC):
**E02F 9/28** *(2006.01)* **G01L 5/1627** *(2020.01)*

(52) Cooperative Patent Classification (CPC):
**E02F 9/2825; G01L 5/1627**

(86) International application number:
**PCT/EP2023/061308**

(87) International publication number:
**WO 2023/209182 (02.11.2023 Gazette 2023/44)**

(54) **STRAIN MEASURING SENSOR DEVICES FOR EARTH MOVING MACHINES AND CORRESPONDING METHOD**

DEHNUNGSMESSSENSORVORRICHTUNGEN FÜR ERDBEWEGUNGSMASCHINEN UND ZUGEHÖRIGES VERFAHREN

DISPOSITIFS DE CAPTEUR DE MESURE DE CONTRAINTE POUR MACHINES DE TERRASSEMENT ET PROCÉDÉ ASSOCIÉE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.04.2022 EP 22382417**

(43) Date of publication of application:
**05.03.2025 Bulletin 2025/10**

(73) Proprietor: **Metalogenia Research & Technologies S.L.**
**08005 Barcelona (ES)**

(72) Inventors:
• **GIMENO TORDERA, Albert**
**08005 Barcelona (ES)**
• **FERRÁNDIZ BORRAS, Vicent**
**08005 Barcelona (ES)**

(74) Representative: **Elion IP, S.L.**
**Paseo Castellana, 150-4 dcha**
**28046 Madrid (ES)**

(56) References cited:
**US-A- 3 695 096     US-A1- 2002 092 364**

• **GRUENBAUM P ET AL: "TRIAXIALE MESSUNG DER SCHNEIDKRAEFTE AN DEN ZAEHNEN EINES SCHAUFELRADBAGGERS", MESSEN UND PRUFEN, IVA INTERNATIONAL, MUNCHEN, DE, vol. 26, no. 4, 1 April 1990 (1990-04-01), pages 175 - 180, XP000170907, ISSN: 0937-3446**

## Description

## TECHNICAL FIELD

The present disclosure relates to the field of earth moving machines. More particularly, the present disclosure relates to sensor devices, wear elements and assemblies with wear elements capable of measuring unitary deformations in an accurate and reliable manner.

## BACKGROUND

Earth moving machines such as, for example, excavators, draglines, loaders, shovels, etc., include digging implements, e.g. bucket, shovel, dredgehead, etc., whereby material is pushed, penetrated, scratched, pulled and/or collected. The engagement of material has an adverse effect on the digging implements because every time the implements engage the ground, they are subject to loads, impacts and stresses of high intensity that deform and wear the implements off, or even break them.

At least for this reason, wear elements are coupled with the digging implements. The wear elements protect the implements from wear and impacts that may deform and damage said digging implements. Additionally, wear elements are designed to increase the effectivity of ground engagement. Since the wear elements are the ones subject to the adverse phenomena of wear and impacts, the wear elements must be replaced frequently.

It is necessary to monitor the forces and stresses that wear elements are subject to for both in-time replacement of the wear elements and adequate operation of the earth moving machine. In this sense, information about the location, direction and intensity of the forces and stresses applied to the wear elements can be used to know their status regarding wear and potential remaining useful life. That type of data can be used by the machine or an operator of the machine for adjustment of the how the machine (and especially the wear elements) is to engage and load the ground material in terms of force, angle, velocity, etc. Likewise, the envelope of the machine and/or the commands issued by the operator could be modified to limit the movements of the machine or the digging implements, or even the activities in the quarry be changed to make them conditional on the status or remaining useful life of the wear elements.

Efforts such as those described in GRUENBAUM P ET AL: TRIAXIALE MESSUNG DER SCHNEIDKRAEFTE AN DEN ZAEHNEN EINES SCHAUFELRADBAGGERS, MESSEN UND PRUFEN, IVA INTERNATIONAL, MUNCHEN, DE, vol. 26, no. 4, 1 April 1990 (1990-04-01), pages 175-180, are unable to provide adequate monitoring as the strain gauges just measure straining corresponding to applied cutting forces in orthogonal directions without establishing the loads that teeth may be subjected to.

There is a need for measuring strains of the wear elements that is reliable and cost-effective so that, based on the measured strains, the forces and/or stresses can be determined.

## SUMMARY

A first aspect relates to a sensor device includes: at least one body; a first plurality of strain measuring sensors arranged on one or more bodies of the at least one body such that the first plurality of sensors measures strains enabling provision of force values in at least two different axes, where the first plurality includes at least four strain measuring sensors; and one or more electronic devices configured to provide, for at least two different axes, a difference between measurements of two different strain measuring sensors of the first plurality for each axis of the at least two different axes.

The sensor device is attachable to a cavity of a wear element for digging implements of an earth moving machine so that the strains of the wear element are measurable with the strain measuring sensors. At least when the sensor device has multiple bodies, the sensor device may be attachable to multiple cavities of the wear element such that one or more bodies are attached to a cavity and one or more other bodies are attached to one or more other cavities.

Upon attaching one or more sensor devices to a wear element, for instance attached to or introduced in a cavity of the wear element for receiving the sensor device, the sensor device(s) measures strains of the wear element, said strains being transmitted from other wear element or elements that are in direct contact with the soil or dug material, for example the teeth, the shrouds, etc. This means that sensor devices may be attached to wear elements that have limited engagement with the ground or no engagement at all, yet measure the strains of the wear elements that actively engage the ground; so the wear elements that the sensor devices are attached to are replaced less frequently than those others whose strains want to be measured. In the context of the present disclosure, strains refer to unitary microdeformations in the material and/or fibers of a wear element like the ones produced by forces/stresses exerted on the wear elements while the earth moving machine is working.

The use of at least four strain measuring sensors enables the measurement of strains in four points distributed on one or more sensor bodies that deforms proportionally, and in a similar way, to the digging implement that is resisting and transmitting the digging forces from the tooth to the bucket, allowing to determine forces in at least two perpendicular force axes but it also makes possible to determine them in up to three perpendicular axes in a Cartesian coordinate system, which inter alia is convenient at least for determining the efficiency in the operation of the machine.

The one or more electronic devices receive and process the measurements of the strain measuring sensors to at least provide a difference between them in each of the two perpendicular axes, for instance differences of measurement values along horizontal (or transversal) and vertical axes. The difference values will be for the axes corresponding to the arrangement of the strain measuring sensors, thus it could be any other two axes, including two non-perpendicular axes, which is more common when the first plurality has more than four strain measuring sensors.

The strain measuring sensors on the sensor device are arranged such that at least a pair of sensors measures strains with respect to a first axis, and another pair of sensors measures strains with respect to a second axis. As the sensors of each pair are one apart the other along the axis for which strains are to be measured, two different strain measurements are obtained according to a same axis. The difference between the two strain measurements is representative of a load exerted on the wear element having the sensor device installed. When the load is exerted, generally one of the sensors of the pair measures a traction owing to the microdeformation of the at least one body that extends the surface where the sensor is, and the other one of the sensors of the pair measures a compression owing to the microdeformation of the at least one body that compresses the surface where the sensor is. In some cases, however, such load may not produce opposite microdeformations on the portions where the two sensors are, since that might also depend on the geometry of the body or wear element where the sensors are located and how it deforms so, for example, the two portions may compress yet one portion compresses more than the other.

In some embodiments, the one or more electronic devices are configured to provide force values in the at least two different axes, where the force value in each axis is provided based on measurements of two different strain measuring sensors of the first plurality, and more particularly based on the difference of the measurements for each axis.

In some embodiments, the one or more electronic devices are configured to transmit, in wired or in wireless form, the differences between the measurements of the strain measuring sensors of the first plurality to one or more other devices remote from the sensor device. This, in turn, enables the provision of the force values in the at least two different axes at the one or more other devices.

The one or more electronic devices process the strain measurements of each pair of sensors to quantify, either analogically or digitally, the difference in straining that the sensor device has been subjected to in each axis, thereby enabling subsequent determination of the force value. By processing the type of straining through the sign of the measurement, the direction with which the force is being applied to the assembly can be determined, either at the sensor device or at the one or more devices remote from the sensor device once the difference values have been provided to such one or more remote devices.

The same processing is applied to at least the two pairs of sensors to enable obtention of the force values in the two axes. The one or more remote devices may be within the earth moving machine or remote therefrom, e.g. a control center, a wireless device of an operator, etc.

The sensitivity in force determination along each axis depends upon the strain differential that results from the measurements of the corresponding strain measuring sensors, which are dependent upon the deformability (i.e. level of deformation) of the portions of the device where said sensors are arranged. The greater the deformability of these portions is, the greater the sensitivity will be. And a factor determining the accuracy with which the force along each axis will be determined is the independence in the deformation along one axis with respect to the deformation along an axis perpendicular thereto; that is to say, the force will be determined more accurately when the force along one axis causes little or no deformation along a perpendicular axis.

In some embodiments, the one or more electronic devices are configured to provide a combined measurement of some or all strain measuring sensors of the first plurality for a third axis of the at least two different axes (i.e. the at least two different axes having three axes, preferably three perpendicular axes, e.g. horizontal (or transversal), vertical and longitudinal). The third axis is different than first and second axes for which differences between measurements of pair of strain measuring sensors have been provided.

In some embodiments, the one or more electronic devices are configured to provide the force values in three axes, preferably three perpendicular axes, e.g. horizontal (or transversal), vertical and longitudinal.

In some embodiments, the one or more electronic devices are configured to transmit, in wired or in wireless form, the combined measurement of some or all strain measuring sensors of the first plurality to one or more devices remote from the sensor device. This, in turn, enables the provision of the force value in the third axis at the one or more remote devices.

For the provision of the force value in the third axis, the electronic device(s) combines the measurements of some or all strain measuring sensors of the first plurality to derive the traction or compression force value. The combination of the values measured by the sensors will be indicative of whether the force exerted on the sensor has been tractive or compressive since at least some sensors will have undergone traction or compression when some force is applied to the assembly when the digging implements contact material. In this sense, depending on the sign of the resulting value, the force will be a traction force or a compression force.

The combination of the measurements can be by way of e.g. an arithmetic sum of the measurements, and the result may be averaged for an accurate magnitude value. Whereas the force values in the two first axes are derived from the differences in straining between pairs of sensors, the force value in the third axis is derived from the positive combination in straining of all sensors. This is so because when there is compression or traction along the third axis, the microdeformation in the sensor device in this axis will be compressive or tractive; a differential value between measurements of pairs of sensors will yield a result of zero or close to zero because the same compression or traction has been measured by each sensor.

Notwithstanding the above, in some embodiments, the first plurality of strain measuring sensors includes at least six strain measuring sensors arranged on the at least one body such that the first plurality of sensors measures strains in three different axes. In those cases, a third pair of sensors is arranged for measuring strains in the third axis in the same manner as strains in the other two axes are measured with pairs of sensors.

In some embodiments, the first plurality of strain measuring sensors is arranged such that it measures strains corresponding to shear forces or stresses. The first plurality includes at least six strain measuring sensors.

At least a pair of strain measuring sensors may be arranged with its sensors forming an angle between 30° and 60°, preferably as close as possible to 45°, with respect to other strain measuring sensors of the first plurality so as to allow calculation of shear forces or stresses. In this way, the measurements of that pair (or pairs) of strain measuring sensors can lead to the calculation of the distance or location where a load is applied onto the wear element.

In the context of the present disclosure, shear stresses are the stresses or the component thereof that is tangential to the plane on which the force or forces act.

In some embodiments, the sensor device further includes a second plurality of strain measuring sensors arranged on the at least one body, where the number of strain measuring sensors in the second plurality is equal to or less than the number of strain measuring sensors in the first plurality, and each strain measuring sensor of the second plurality being arranged both adjacent to and perpendicular to a different strain measuring sensor of the first plurality.

The use of additional strain measuring sensors enables compensation of temperature effects. Temperature potentially alters the measurements of the strain measuring sensors of the first plurality, thus the measurements in each axis are adjusted based on the values of the strain measuring sensors of the second plurality. Compensation of these effects improves the precision of both the measurements (and the differences provided based on said measurements) and the force values.

Preferably, the number of sensors in the second plurality is equal to the number of sensors in the first plurality so that compensation can be conducted for the measurements of all strain measuring sensors of the first plurality.

In some embodiments, the sensor device further includes one or more (first) cables, the one or more cables being electrically connected with: one or more of the strain measuring sensors of the first plurality (and of the second plurality, if any), and either the one or more electronic devices or at least one printed circuit board including the one or more electronic devices.

In some embodiments, the sensor device further includes one or more (first or second) cables, the one or more cables being electrically connected, at a first end thereof, with the one or more electronic devices or at least one printed circuit board including the one or more electronic devices. Further, a second end of the one or more cables is connected or connectable with one or more other devices remote from the sensor device.

In some other embodiments, the one or more electronic devices or at least one printed circuit board including the one or more electronic devices comprise/s a wireless communications module for transmission of data, in wireless form, to said one or more other remote devices.

In some embodiments, each of the strain measuring sensors of the first plurality is arranged on a body of the at least one body with an orientation of

$$\alpha = \frac{n \cdot 360°}{N}$$ relative to a first face of the body of the at least one body and with a different value for *n*, where *n* is a natural number taking a value ranging from 0 to N-1, and N being equal to the number of strain measuring sensors in the first plurality.

The strain measuring sensors are evenly distributed on the surface of the sensor device, preferably in one or more transverse planes having a normal vector parallel to one of three axes of the sensor device, preferably a longitudinal axis. In this way, the straining suffered by the different sides of the cavity where the sensor device is arranged and which are reproduced in the at least one body can be measured and in the two or three different axes with higher accuracy.

In some embodiments, the at least one body is of polyamide, polypropylene or polycarbonate.

Strains of the wear element that are transferred to the material partially or completely filling the cavity, are transferred to the at least one body more effectively when the filling material is capable of transferring the microdeformation of the wear element to the at least one body, thus said material should be rigid enough to deform the at least one body. Additionally, the at least one body should preferably be less rigid (i.e. softer) than the means for attaching the sensor (i.e. the material filling the cavity) to get deformed more effectively by the means. For example, but without limitation, the at least one body is of one of the aforesaid materials. In some of these embodiments, the material filling the cavity has a reduced hardness.

In some embodiments, the at least one body includes, i.e. has, a cylindrical shape or a rectangular prism shape.

In some embodiments, the at least one body is a single body including a cavity or a through hole that makes the sensor device hollow or the at least one body includes a plurality of bodies coupled therewith such that a cavity or a through hole is formed that makes the sensor device hollow; the at least one body includes a plurality of channels formed on an external part of the at least one body, each channel being formed between two external faces of the at least one body; the one or more electronic devices (and/or the at least one printed circuit board, if any) are introduced in the cavity or the through hole of the at least one body; the strain measuring sensors of the first plurality (and of the second plurality in those embodiments in which the assembly includes it) are arranged on one or more external faces of the at least one body; and each of the one or more cables of each strain measuring sensor extending between the one or more electronic devices or the at least one printed circuit board and the respective strain measuring sensor with a portion of the cable extending through one channel of the plurality of channels.

The sensor device is compact in size and embeds all the electronics necessary for operation thereof including, in some embodiments, energization means such as one or more batteries.

The cables do not project from the sensor device owing to the channels formed for routing the cables between the strain measuring sensors and the electronic device(s) and/or PCB. And the electronic device(s) and/or PCB are/is protected by the at least one body owing to their/its location within the cavity or through hole of the body, and furthermore does not increase the volume of the sensor device.

In some embodiments, one or more bodies of the at least one body is/are shaped such that each has a cavity or a through hole formed therein, i.e. the body is hollow. In some of these embodiments, the one or more electronic devices (and/or the at least one printed circuit board, if any) are introduced in a cavity or through hole of the cavity or through hole of a body of the one or more bodies; the strain measuring sensors of the first plurality (and of the second plurality in those embodiments in which the assembly includes it) are arranged on one or more internal or external faces of a body of the one or more bodies.

The hollow body or bodies may feature a shape that is, for example but without limitation, cylindrical, or oval, or square, or rectangular, etc.

In some embodiments, an end of a body of the at least one body is wider than the rest of the body, that is to say, the wider end has a width or diameter bigger than that of the rest of the body. In some of these embodiments, the body has one or more grooves and/or holes at the wider end.

Grooves or holes can direct strain deformations from the body towards the strain measuring sensors, with little or no reduction of intensity of the deformations. Further, grooves or holes can decrease the temperature that reaches the components of the sensor device during the welding operations.

Lids of the sensor device may be arranged at the wider end of the bodies to protect it, and more particularly to protect the electronics and the plurality of strain measuring sensors from external fines, dirt and hits.

In some embodiments, the at least one body has a rough surface on an external part thereof. In some embodiments, the rough surface is at least on respective ends of the at least one body. In some embodiments, the rough surface includes ribs formed on the external part.

The rough surface provides the external part of the at least one body with both greater friction between the sensor device and its surroundings, thereby reducing the mobility of the sensor device in the cavity, and greater transmissibility of the deformations of the wear element to the sensor device. For example, when the sensor device is surrounded by material of e.g. a potting process, the greater friction between the body and the hardened flowable material limits the movement of the sensor device whilst further deforming the sensor device.

In some embodiments, the at least one body is of a weldable material. In some embodiments, the weldable material is 30CrNiMo8 or 42CrMo4.

By manufacturing the at least one body in one of the aforesaid steels, the measurements of the sensor device are more reliable, even more so when the sensor device is attached to the wear element by providing welding seams therebetween. This is so because the toughness of the at least one body is considerably high and, moreover, the at least one body may be less porous than with other materials, both of which make possible to subject the at least one body to more deformation before breaking.

Preferably, the at least one body features similar hardness as the wear element or is less hard, i.e. softer, than the wear element. The strains are transferred to the sensor device in a greater level when such relation of hardness values exists.

In some embodiments, the sensor device further includes a cover including steel material, the cover being coupled with the at least one body or couplable with a wear element (where the sensor device is to be arranged) such that a cavity is formed therebetween (i.e. between the cover and the at least one body). The at least one body is a single body; the one or more electronic devices (and/or the at least one printed circuit board, if any) is introduced in the cavity formed between the cover and the at least one body; and the strain measuring sensors of the first plurality (and of the second plurality, if any) are arranged on one or more external faces of the at least one body.

The cover protects the strain measuring sensors from fines that alter the electrical signals the sensors provide, and it also protects the electronics that are embedded within the sensor device from material pressure and wearing, including wiring (if any) that connects the sensor device with one or more other devices remote from the sensor device or a wear element assembly including the sensor device, for example a power source that electrically powers the sensor device. The electronics include, in some embodiments, energization means such as one or more batteries, in which case there may be no electrical wiring connecting the sensor device with other devices remote therefrom.

The electronic device(s) and/or the PCB are/is protected by the at least one body owing to their/its location within the cavity of the body, which furthermore does not increase the volume of the sensor device.

Some gap may exist between the cover and the at least one body so as to avoid transferring hits from the cover to the body when the former receives hits. Hence, preferably the cover does not touch the at least one body.

In some embodiments, the cover has a geometry such that, when the cover is coupled with the at least one body or with a wear element where the sensor device is to be arranged, it at least covers some or all strain measuring sensors of the first plurality (and of the second plurality, if any) for protection thereof.

In some embodiments, the sensor device further includes one or more shells with at least a portion thereof interposed between a body of the at least one body and a cover, the shell being arranged such that it closes the cavity formed between the body of the at least one body and the cover. In some embodiments, the shell is arranged such that it also covers some or all of the strain measuring sensors of the first plurality (and of the second plurality, if any).

The shell provides the sensor device and the contents thereof with an additional protective layer that is watertight. In this sense, the shell at least covers the contents of the cavity formed between the at least one body and the cover. For example, in some embodiments, the shell covers one or more of: the one or more electronic devices, the at least one printed circuit board, one or more electric cables or wires connecting the sensor device with one or more other devices remote from the assembly, electronics, etc. The shell may also reduce the likelihood of cables disconnecting from parts of the sensor device when the sensor device is mounted on a wear element since the wear element assembly is subject to impacts.

Further, by closing the cavity, the shell makes the volume of the cavity to be watertight, thereby preventing the ingress of water, particles, fines, etc., that may damage or break components within the cavity, and also protects the components within the cavity from forces applied to the sensor device that could e.g. alter the electrical signals provided.

In some embodiments, the strain measuring sensors of the first plurality (and of the second plurality in those embodiments in which the assembly includes it) are strain gauges or piezoelectric sensors.

In the context of the present disclosure, strain measuring sensors that are capable of measuring strains in two or more dimensions, i.e. with respect to two or more axes, are considered to be multiple strain measuring sensors, specifically one sensor per dimension or axis;

for example, a T-rosette strain gauge, which is capable of measuring strains biaxially, are two strain gauges.

A second aspect relates to a wear element assembly for digging implements of an earth moving machine, including: a wear element at least adapted for coupling with the digging implements and/or another wear element for digging implements, the wear element including a cavity; a sensor device as described in the first aspect; and means for attaching the sensor device to an interior of the cavity.

The wear element has the cavity for receiving the sensor device, which makes possible to measure strains of the wear element. The cavity physically protects the sensor device and, to this end, the cavity is dimensioned according to the sensor device, or is larger than the sensor device.

The attaching means attach the sensor device to the cavity so that strains of the wear element are coupled to the strain measuring sensors whilst maintaining the sensor device within the cavity.

In some embodiments, the means for attaching include material at least partially filling the cavity with the sensor device introduced in the cavity. In some embodiments, the material is one of: a thermosetting plastic, a silicone rubber gel, and an epoxy resin.

The material is preferably a flowable material that hardens after waiting some time subsequent to the application thereof. The material can be applied by way of a potting process whereby the cavity is filled or partially filled with the material whilst the sensor device is introduced therein.

The provision of this material is also convenient for protecting the sensor device and the components thereof from e.g. fines and water, as watertightness is attained. It likewise reduces the play of any cables that may be arranged within the sensor device, hence detachment of the cables by accident during operation of an earth moving machine or during maintenance tasks is infrequent.

In some embodiments, at least a portion of the cavity includes a cylindrical shape and the at least one body of the sensor device includes a cylindrical shape.

In some embodiments, at least a portion of the cavity includes, i.e. has, a rectangular prism shape and the at least one body of the sensor device includes, i.e. has, a rectangular prism shape.

In some embodiments, the assembly further includes one or more lids each introduced in an opening of a cavity of the wear element. In some embodiments, each lid includes an opening adapted for introduction of one or more cables.

The lid reduces the probability with which fines or particles from the outside are to physically contact any of the material filling the cavity and the sensor device, which otherwise can alter, even significantly, the measurements by the sensor device. The lid likewise reduces the likelihood of the sensor device exiting the cavity during operation of the earth moving machine since the lid requires force to be extracted. The lid does not preclude the possibility of connecting one or more cables from the outside of the cavity with the sensor device, for example for communication of data and/or for energization of the sensor device, since an opening is preferably provided to that end.

In some embodiments, the means for attaching include a plurality of welding seams between the at least one body and the cavity.

In some embodiments, the plurality of welding seams includes four welding seams, each preferably arranged on a different corner of the at least one body, that contact the cavity of the wear element. In some embodiments, a sum of thicknesses of the four welding seams is greater than a thickness of the at least one body of the sensor device on a center-most part thereof.

The provision of four welding seams improves the transference of strains and forces along all three Cartesian axes to the sensor body for measurement thereof.

The welding seams transfer and withstand said strains and forces more reliably when the combination of the thicknesses thereof is greater than the thickness of the at least one body. In this sense, all the thicknesses are measured along a common Cartesian axis.

Further, said capacity of transferring and withstanding the strains and efforts is greater whenever said relationship between thicknesses is fulfilled for two different Cartesian axes. The two axes are preferably the axes that define the cross-section of the at least one body, at the center-most part, that features the smallest surface.

In some embodiments, the wear element includes one of: an adapter, a cast nose, a weld-on nose, a cast lip (or a part thereof) or a shroud.

In some embodiments, the assembly further includes one or more devices remote from the sensor device.

The one or more devices may receive data from the sensor device, either in wired or in wireless form, for example differences between measurements of strain measuring sensors, and/or a combined measurement of some or all strain measuring sensors as described above in the first aspect. The one or more devices may include one or more processors and/or electronic devices configured to process the data received from the sensor device and provide force values in two or more axes.

In some embodiments, the cavity is formed on an external surface of the wear element, for example an external surface of the adapter like e.g. a top surface thereof (opposite a bottom surface thereof that is typically closer to the soil during ground engaging operations), or a side surface thereof.

In some embodiments, the cavity is formed adjacent to a hole or through hole adapted to receive fixing means such as a fixing pin intended to reliably attach the wear element to another wear element. In some embodiments, the cavity is parallel to the hole or through hole for fixing means. In some embodiments, the cavity is at a distance from a front end of the wear element greater than a distance of the hole or through hole for fixing fixing means from the front end.

In some other embodiments, the cavity is formed on an internal surface of the wear element, such as an internal surface of the adapter that is intended to receive a lip.

In some embodiments, the cavity has two openings, thereby forming a through hole.

A third aspect relates to an earth moving machine including digging implements, and one or more sensor devices according the first aspect and/or one or more wear element assemblies according to the second aspect.

The earth moving machine includes one or more sensor devices and/or wear element assemblies capable of measuring the strains that the wear elements are subjected to in a manner that is reliable, simple and cost-effective. The sensor devices used to that end are furthermore protected, accordingly they are capable of withstanding significant loads applied to the digging implements.

A fourth aspect relates to a method including: introducing a sensor device inside a cavity of a wear element for digging implements of an earth moving machine; arranging a first plurality of strain measuring sensors on one or more bodies of at least one body of the sensor device, where the first plurality includes at least four strain measuring sensors; attaching the sensor device to the cavity when the sensor device is introduced therein; measuring strains, enabling provision of force values in at least two different axes, on the at least one body with the strain measuring sensors of the first plurality; and providing, with one or more (first) electronic devices, for at least two different axes, a difference between measurements of two different strain measuring sensors of the first plurality for each axis of the at least two different axes.

For measurement of strain in the two axes, at least two pairs of strain measuring sensors of the first plurality are arranged on the at least one body such that the sensors of each pair are apart at least along the axis for which the strain is to be measured and arranged at locations that produce a straining differential between the strains present in said locations.

The one or more electronic devices providing the difference between the measurements are preferably within the wear element, particularly arranged in or on the sensor device.

In some embodiments, the method further includes providing, with one or more (first or second) electronic devices, force values in the at least two different axes, where the force value in each axis is provided based on measurements of two different strain measuring sensors of the first plurality, more particularly based on the differences between measurements.

The one or more electronic devices providing the force values may be the same as (i.e. one or more first electronic devices) or different ones to (i.e. one or more first electronic devices and one or more second electronic devices) the one or more electronic devices providing the difference between the measurements.

The one or more electronic devices providing the force values may be within the wear element, particularly arranged in or on the sensor device, or be remote from the sensor device and, optionally, remote from the wear element.

In some embodiments, the sensor device is a sensor device as described in the first aspect.

In some embodiments, the sensor device and the wear element form a wear element assembly according to the second aspect. That is to say, the sensor device, the wear element or the cavity thereof has features as described with reference to the second aspect, including as described with reference to embodiments of the second aspect.

In some embodiments, the method further includes providing a combined measurement of some or all strain measuring sensors of the first plurality for a third axis of the at least two different axes (i.e. the at least two different axes having three axes, preferably three perpendicular axes). The third axis is different than first and second axes for which differences between measurements of pair of strain measuring sensors have been provided.

In some embodiments, the provision of the force values is in three different axes, where the force value in a third axis is provided based on measurements of some or all strain measuring sensors of the first plurality, particularly based on the combined measurement of some or all strain measuring sensors of the first plurality.

In some embodiments, the method further includes providing, with one or more (first or second) electronic devices, shear force values or a point of application of a force on the wear element based on measurements of two different strain measuring sensors of the first plurality arranged forming an angle between 30° and 60° with respect to the other strain measuring sensors of the first plurality. The first plurality includes at least six strain measuring sensors.

In some embodiments, the method further includes arranging a second plurality of strain measuring sensors on one or more bodies of the at least one body, where the number of strain measuring sensors in the second plurality is equal to or less than the number of strain measuring sensors in the first plurality, and each strain measuring sensor of the second plurality being arranged both adjacent to and perpendicular to a different strain measuring sensor of the first plurality; and the provision of the force values is further based on the measurements of all strain measuring sensors of the second plurality.

In some embodiments, the method further includes electrically connecting the one or more electronic devices or at least one printed circuit board including the one or more electronic devices with each strain measuring sensors of the first plurality (and of the second plurality in those embodiments in which the second plurality is arranged) with one or more respective cables.

In some embodiments, the method further includes transmitting, in wired or in wireless form, the differences between the measurements of the strain measuring sensors of the first plurality to one or more other devices remote from the sensor device, thereby enabling the provision of the force values in the at least two different axes at the one or more other devices.

In some embodiments, the method further includes transmitting, in wired or in wireless form, the combined measurement of some or all strain measuring sensors of the first plurality to one or more devices remote from the sensor device, thereby enabling the provision of the force value in the third axis at the one or more remote devices.

In some embodiments, in the step of arranging the strain measuring sensors of the first plurality, each of the strain measuring sensors is arranged on a body of the at least one body such that with an orientation of $\alpha = \frac{n \cdot 360°}{N}$ relative to a first face of the body of the at least one body and with a different value for $n$, where $n$ is a natural number taking a value ranging from 0 to N-1, and N being equal to the number of strain measuring sensors in the first plurality.

In some embodiments, the step of attaching the sensor device to the cavity includes: at least partially filling the cavity when the sensor device is introduced therein with flowable material; and hardening or waiting for hardening the flowable material when at least partially filling the cavity.

In some embodiments, the method further includes filling the sensor device or part thereof with flowable material. In some embodiments, filling the sensor device or the part thereof is conducted with the sensor device or the part inside a mold. In some embodiments, the method further includes hardening or waiting for hardening the flowable material before introducing the sensor inside the cavity. In some embodiments, filling the sensor device or the part thereof includes providing the sensor device or the part, on an external part thereof, with a rough surface and/or with projecting members or ribs with the flowable material.

In some embodiments, the flowable material is one of: a thermosetting plastic, a silicone rubber gel, and an epoxy resin.

In some embodiments, the at least one body is a single body including a cavity or a through hole that makes the sensor device hollow or the at least one body includes a plurality of bodies coupled therewith such that a cavity or a through hole is formed that makes the sensor device hollow; the at least one body includes a plurality of channels formed on an external part of the at least one body, each channel being formed between two external faces of the at least one body; the method further includes introducing the one or more electronic devices (and/or the at least one printed circuit board, if any) in the cavity or the through hole of the at least one body; in the step of arranging the strain measuring sensors of the first plurality (and of the second plurality in those embodiments in which a second plurality is arranged) the strain measuring sensors are arranged on one or more external faces of the at least one body; and the step of electrically connecting the one or more electronic devices or at least one printed circuit board with each strain measuring sensors of the first plurality (and of the second plurality in those embodiments in which a second plurality is arranged) includes extending each of the one or more cables of each strain measuring sensor between the electronic device or at least one printed circuit board and the respective strain measuring sensor with a portion thereof extending through one channel of the plurality of channels.

In some embodiments, one or more bodies of the at least one body is/are shaped such that each has a cavity or a through hole formed therein. In some of these embodiments, the method further includes introducing the one or more electronic devices (and/or the at least one printed circuit board, if any) in a cavity or through hole of the cavity or through hole of a body of the one or more bodies; and in the step of arranging the strain measuring sensors of the first plurality (and of the second plurality in those embodiments in which a second plurality is arranged) the strain measuring sensors are arranged on one or more internal or external faces of a body of the one or more bodies.

In some embodiments, the method further includes introducing a lid on an opening of the cavity (or cavities) of the wear element. In some embodiments, the lid includes an opening adapted for introduction of one or more cables.

In some embodiments, the step of attaching the sensor device to the cavity (or cavities) includes welding a plurality of portions of the at least one body and the cavity.

In some embodiments, the method further includes coupling a cover including steel material on the at least one body or the wear element such that a cavity is formed between the cover and the at least one body, the at least one body is a single body contacting the cavity; and introducing the one or more electronic devices (and/or the at least one printed circuit board, if any) in the cavity formed between the cover and the at least one body. And in the step of arranging the strain measuring sensors of the first plurality (and of the second plurality in those embodiments in which a second plurality is arranged) the strain measuring sensors are arranged on one or more external faces of the at least one body.

In some embodiments, the method further includes arranging a shell with at least a portion thereof interposed between the at least one body and the cover in such a manner that the shell closes said cavity formed between the at least one body and the cover. In some embodiments, the shell is arranged such that it also covers some or all of the strain measuring sensors of the first plurality (and of the second plurality in those embodiments in which a second plurality is arranged).

In some embodiments, the method further includes producing the at least one body by one of: forging, microfusion casting, machining, or a combination thereof (e.g. at least one body casted by way of microfusion and machined afterwards).

For instance, a forged body (or bodies when the at least one body includes two or more bodies) features low porosity and a high toughness, both of which are advantageous for supporting deformation before the body breaks. With the acceptance of a greater deformation, the sensor device is capable of measuring more straining.

In some embodiments, the method further includes: mounting the wear element on the digging implements; and operating the earth moving machine after mounting the wear element.

A fifth aspect relates to a wear element for digging implements of an earth moving machine, including: one or more cavities; a first plurality of strain measuring sensors, each sensor being arranged in a cavity of the one or more cavities, where the first plurality includes at least four strain measuring sensors, the arrangement of the first plurality of sensors being for measuring strains that enable provision of force values in at least two different axes; means for attaching each strain measuring sensor of the first plurality to the respective cavity; and one or more electronic devices configured to provide, for at least two different axes, a difference between measurements of two different strain measuring sensors of the first plurality for each axis of the at least two different axes.

The wear element itself can act as a load cell whereby strains on different portions of the wear element are measured with the strain measuring sensors. The wear element is preferably at least adapted for coupling with the digging implements and/or another wear element for digging implements.

The one or more cavities protect the strain measuring sensors from impacts and wear during operation of the earth moving machine, and likewise reduces the likelihood of the sensors falling off from the wear element despite the means for attaching them thereto.

The means for attaching the sensors can be any known in the art, for example with adhesive or resin, and at least those particularly described with reference to the second aspect.

The measurements provided by the sensors are then processed by the one or more electronic devices in the same fashion explained with reference to the first aspect.

In some embodiments, one, some or all strain measuring sensors of the first plurality are embodied in a sensor device as described in the first aspect. In some embodiments, some or all strain measuring sensors are embodied in a same sensor device whereas, in some other embodiments, some or all strain measuring sensors are embodied in different sensor devices.

In some embodiments, the wear element includes one of: an adapter, a cast nose, a weld-on nose, a cast lip (or a part thereof) or a shroud.

In some embodiments, the one or more electronic devices are configured to provide force values in the at least two different axes, where the force value in each axis is provided based on measurements of two different strain measuring sensors of the first plurality.

In some embodiments, the one or more electronic devices are configured to provide a combined measurement of some or all strain measuring sensors of the first plurality for a third axis of the at least two different axes.

In some embodiments, the one or more electronic devices are configured to provide the force values in three different axes. The force values for the third axis are obtained by processing measurements of all sensors in the first plurality.

In some embodiments, the one or more electronic devices are configured to shear force values or a point of application of a force on the wear element based on measurements of two different strain measuring sensors of the first plurality arranged forming an angle between 30° and 60° with respect to the other strain measuring sensors of the first plurality.

In some embodiments, the wear element further includes a second plurality of strain measuring sensors, each sensor being arranged in a cavity of the one or more cavities, where the number of strain measuring sensors in the second plurality is equal to or less than the number of strain measuring sensors in the first plurality, and each strain measuring sensor of the second plurality being arranged both adjacent to and perpendicular to a different strain measuring sensor of the first plurality.

A sixth aspect relates to an earth moving machine including digging implements, and one or more wear elements according to the fifth aspect.

Similar advantages as those described with reference to the first and second aspects may also be applicable to the remaining aspects of the disclosure.

## BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:

Figures 1A-1B and 2 show sensor devices according to embodiments.
Figure 3 shows a sensor device in a cavity of a wear element of assemblies according to embodiments.
Figure 4 shows a cross-section of a wear element of assemblies according to embodiments.
Figures 5A-5B show a sensor device for wear element assemblies according to embodiments.
Figure 6 shows the sensor device of Figures 5A-5B in a cavity of a wear element of assemblies according to embodiments.
Figures 7-8 partially show sensor devices of wear element assemblies according to embodiments.
Figure 9 shows, in an exploded view, a sensor device of wear element assemblies according to embodiments.
Figures 10-11 show wear elements and assemblies according to embodiments.
Figures 12-14 show several locations where cavities of wear elements of assemblies according to embodiments may be.
Figures 15-16 diagrammatically show electronic devices for processing measurements and providing force values.
Figures 17A-17B, and 18A-18B show two examples of strain measurements of strain measuring sensors according to embodiments.
Figures 19A-19B, and 20-24 show sensor devices and/or parts thereof according to embodiments.
Figure 25 partially shows a sensor device arranged in a wear element according to embodiments.
Figure 26 shows a cavity in a wear element for sensor devices according to embodiments.
Figure 27 shows a wear element with a sensor device according to embodiments.
Figure 28 shows a cross-section of a wear element showing a cavity according to embodiments.
Figure 29 shows a sensor device, in a cavity, according to embodiments.
Figure 30 shows a sensor device according to embodiments.
Figures 31-33 show parts of a sensor device like that of Figure 30.
Figure 34 shows a wear element with a sensor device like that of Figures 30-33.
Figure 35 shows a sensor device according to embodiments.
Figure 36 partially shows a sensor device like that of Figure 35.
Figure 37 shows a cross-section of a sensor device like that of Figures 35-36.

## DETAILED DESCRIPTION

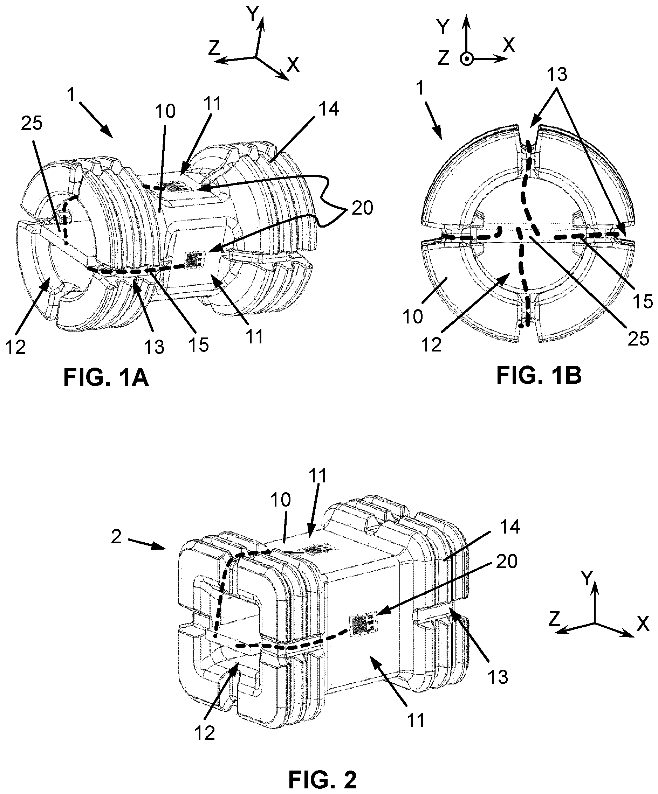

Figure 1A shows, in a perspective view, a sensor device 1 according to embodiments, and Figure 1B shows the sensor device 1 from a side view.

The sensor device 1 includes a body 10, that in this embodiment has a cylindrical shape, N strain measuring sensors 20, and one or more electronic devices for instance installed on a printed circuit board 25. In this example, the strain measuring sensors 20 are provided in the form of strain gauges whereas, in other examples, the strain measuring sensors 20 are provided in the form of piezoelectric sensors. In this example, N is a natural number equal to four, yet in other examples it is greater than four and is preferably, but not necessarily, an even number.

The body 10 includes a portion with a plurality of planar faces 11, in this case with as many planar faces 11 as strain measuring sensors are, that is to say, N planar faces 11, however in other embodiments there are fewer or more planar faces 11, or no planar faces at all because the surface is completely cylindrical. On each one of the planar faces 11 there is one of the N strain measuring sensors 20 attached thereto such that the strain measuring sensors are arranged with an orientation of $\alpha = \frac{n \cdot 360°}{N}$ relative to a first face of the at least one body and with a different value for *n,* where *n* is a natural number taking a value ranging from 0 to N-1; in this embodiment in which there are four strain measuring sensors 20, the orientations $\alpha$ are e.g. 0°, 90°, 180° and 270°. It will be noted that tolerances in the orientation like e.g. $\pm 5°$ are possible since perfect arrangement when it comes to such orientations might be complex.

The strain measuring sensors on the lateral sides according to the view of Figure 1B enable the measurement of strains according to a first axis, particularly the X axis illustrated, and the sensors on the top and bottom sides according to the view of Figure 1B enable the measurement of strains according to a second axis, particularly the Y axis illustrated. Additional strain measuring sensors may be added for additional strain measurements, and/or compensation of temperature effects as known in the art.

The body 10 is shaped such that a through hole 12 is formed therein. The printed circuit board 25 is within the hole 12 so as to remain protected; the PCB 25 can remain attached within the hole 12 by friction, coupling of matching geometries, screws, clamps, nuts, etc. The body 10 is also shaped such that ribs 14 are formed on an external part thereof, for instance at respective ends of the body 10. The ribs 14 increase the friction the body 10 produces with respect to surrounding materials so as to reliably fix the sensor device 1 within a cavity.

One or more cables 15, shown with dashed lines for the sake of clarity only, connect each strain measuring sensor 20 with the PCB 25; in this sense, each cable 15 preferably goes through a channel 13 formed on the external part of the body 10. There may be as many channels 13 as strain measuring sensors 20 are so as to avoid cable entanglement.

The PCB 25 and the one or more electronic devices installed therein may, for example, include, in this and/or in some other embodiments of the present disclosure, one or several of the following devices:

- electronics for reading of the measurements of the strain measuring sensors 20, including digitization of analog measurements thereof; and/or

- electronics for communications of data, for transmission from and/or reception to the sensor device, regardless of whether the transmission and/or reception is in wired or in wireless form; and/or

- electronics for controlling the power supply of the electronic device(s) and/or the PCB 25. To this end, these electronics may take the input power and stabilize it and/or reduce it. Further, the electronics may include electronics configured to protect the PCB 25 and the electronic device(s) from overcurrent and/or surges; and/or

- electronics such as a microcontroller configured to process digital data, for example data provided by the electronics for reading the measurements, and provide said data and/or additional data to the electronics for communications. In some cases, as part of the processing of the digital data, these electronics may compute a difference between measurements of pairs of strain measuring sensors, and/or compute a combined measurements from several or all strain measuring sensors; and/or

- at least one accelerometer for measuring accelerations and inclinations; and/or

- at least one thermometer for measuring the temperature of the sensor device; and/or

- at least one Hall effect sensor for detecting presence of a wear element.

Although in these embodiments the body 10 is made up of a single body, in other embodiments the body 10 is made up of multiple bodies adapted to be coupled together to form the cylindrical body.

Figure 2 shows a sensor device 2 according to embodiments.

The sensor device 2 is similar to the sensor device of the embodiments of Figures 1A-1B, but in these embodiments the body 10 has a rectangular prism shape. As it is apparent, the shape of the body 10 influences the shape that the cavity of a wear element shall have to receive the sensor device.

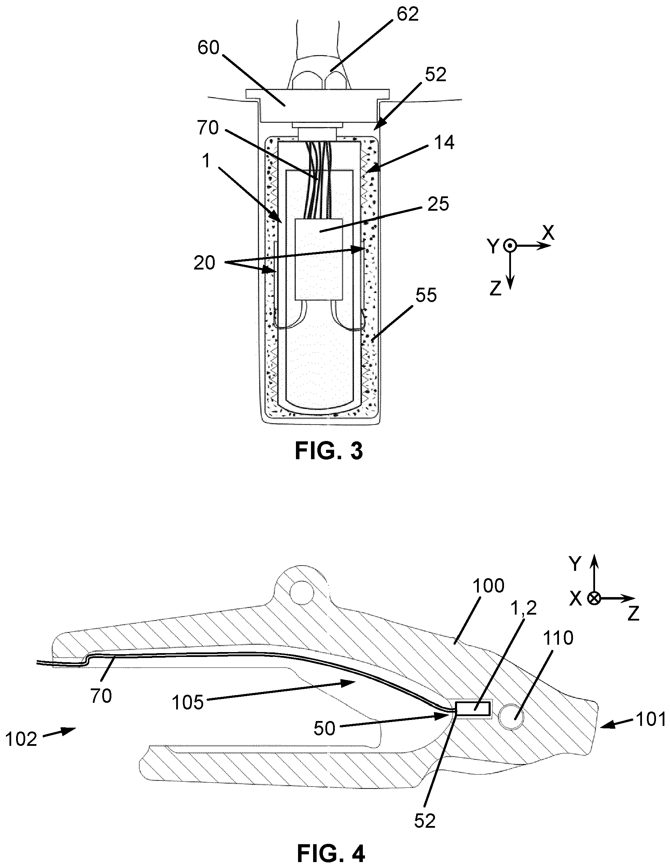

Figure 3 shows a sensor device 1 in a cavity 52 of a wear element of assemblies according to embodiments.

The sensor device 1 is like the one described with reference to Figures 1A-1B, but it will be clear that other sensor devices are possible as well, including but not limited to the sensor device 2 of Figure 2.

The sensor device 1 is within a cavity 52 formed by way of an opening, like opening 50 shown in Figure 4. Once inserted inside the cavity 52, a flowable material 55 is added to fill at least part or the totality of the sensor device 1, like in these embodiments. The material 55, e.g. epoxy resin, can be poured in the cavity 52 by way of a potting process. Once the material 55 hardens, the sensor device 1 is reliably attached to the cavity 52 and, furthermore, the strains of the wear element 100 are better transmitted to the sensor device 1. The ribs 14 of the sensor device 1 also increase the reliability of the attachment of the sensor device 1 to the cavity 52 owing to its contact with the material 55.

A lid 60 is added to close the opening that delimits the cavity 52. Egress of the sensor device 1 from the cavity 52 is also limited by the lid 60. The lid 60 includes an opening in the form of a through hole through which one or more cables 70 can reach the sensor device 1 from outside of the cavity 52. The cables 70 may be ruggedized to increase their useful life, and be protected from e.g. deformation, abrasion, breaks, etc. on the part outside of the cavity 52 with a protective tube 62. In other embodiments, no lid 60 is provided and the cables 70 go directly through the opening forming the cavity 52.

The cables 70 can transmit the measurements of the strain measuring sensors 20 towards one or more electronic devices or even other devices within the wear elements, the digging implements or other parts within or remote from the earth moving machine, e.g. the cabin, a control center at a distance from the machine, etc. The cables 70 can additionally or alternatively be used for transportation of electrical energy, thereby making possible to supply power to the sensor device 1 if it lacks energization means or the same have run out of stored energy.

Figure 4 shows a cross-section of a wear element 100, particularly an adapter 100, of assemblies according to embodiments.

The adapter 100 has a first end 101, relative to its longitudinal axis, adapted for coupling with another wear element, e.g. a tooth, an intermediate adapter, etc., and a second end 102 opposite the first end 101 adapted for coupling with digging implements, e.g. bucket, shovel, dredgehead, etc. for instance a plate lip or a blade thereof. The adapter 100 can be coupled with the digging implements more reliably by way of welding or be cast thereon as known in the art. In this embodiment, the first end 101 includes a male portion (but in other embodiments the first end 101 includes a female portion) and the second end 102 is an attaching end.

The adapter 100 includes means 110 for securing the coupling with the other wear elements; in this case, the means 110 are a through hole for receiving a pin that also goes through a tooth when coupled with the adapter 100. Other means 110 are also possible as known in the art.

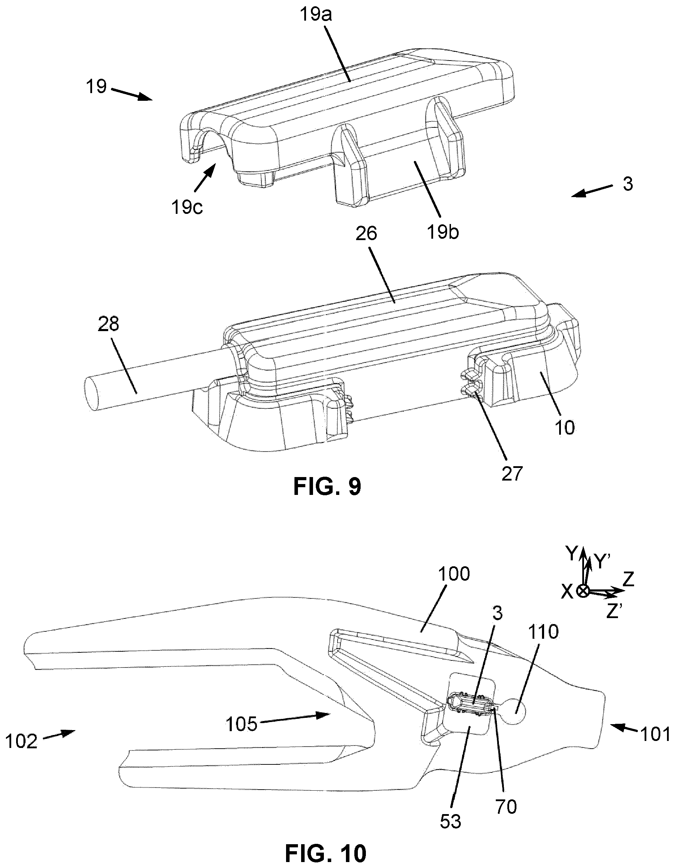

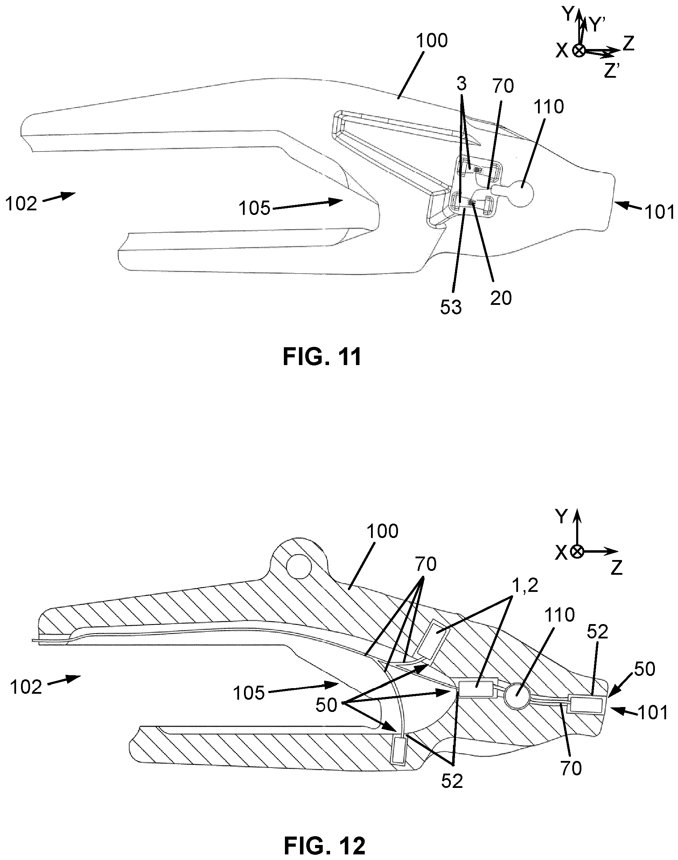

The adapter 100 has a cavity 52, formed by way of an opening 50 in an internal surface 105 of the adapter 100, that is adapted for receiving a sensor device 1, 2. Depending on how the sensor device 1, 2 is arranged in the cavity 52 and how the strain measuring sensors are oriented on the sensor device 1, 2 itself, the sensor device 1, 2 for instance enables the measurement of lateral strains, corresponding to the X axis illustrated, and vertical strains, corresponding to the Y axis illustrated. It will be noted, however, that different axes could be provided aligned with how the sensor device 1, 2 measures strains; in such case, like in Figures 10 and 11, if the lateral and vertical strains or force values were to be provided, the strain measurements of the sensor device 1, 2 could be for example decomposed into the X and Y axes illustrated with trigonometry.

One or more cables 70 can extend from the sensor device 1, 2 to other parts of the same wear element 100 and even reach other wear elements or devices of the machine. The sensor device 1, 2 can transmit and/or receive data through said cable(s) 70, for example to/from a cabin of the machine, and/or be electrically powered via the cable(s) 70, for example from a power source of the machine.

Depending on how the sensor device 1, 2 is arranged, and both the arrangement and number of strain measuring sensors of the sensor device, the sensor device 1, 2 is capable of measuring.

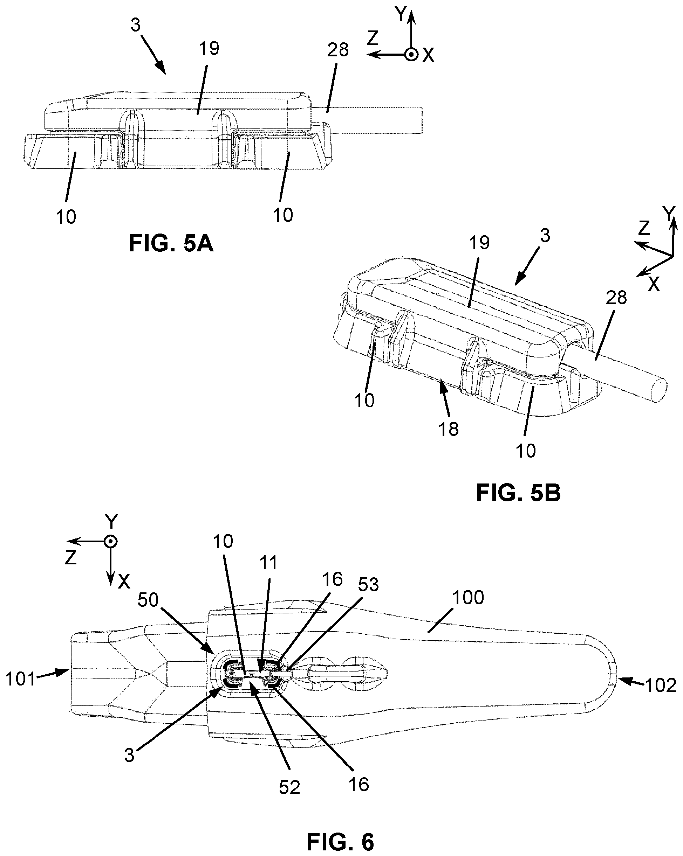

Figures 5A-5B show, from side and perspective views, a sensor device 3 for wear element assemblies according to embodiments.

The sensor device 3 includes a body 10, a cover 19, a plurality of strain measuring sensors (not seen due to the cover 19), and one or more electronic devices and/or a printed circuit board (neither seen due to the cover 19). The sensor device 3 may also include a protector 28 for cables that can be rigid or flexible and route cables towards other parts of the wear element or the earth moving machine.

The body 10 includes edges adapted for attachment of the sensor device 3 to a cavity of a wear element by welding, something that is better seen in Figure 6. One or more welding chamfers 18 can be provided, in this manner side portions of the cover 19 can extend along the welding chamfers 18 so as to better protect the body 10.

The body 10 may include one or more planar faces adapted for attachment of the strain measuring sensors. A space or cavity can be formed between the body 10 and the cover 19 for hosting electronics like e.g. the printed circuit board, energization means, etc.

Figure 6 shows the sensor device 3 of Figures 5A-5B, but without the cover 19, in a cavity 52 of a wear element of assemblies according to embodiments; the wear element is an adapter 100.

The sensor device 3 can remain fixedly attached to the cavity 52, which is formed by way of opening 50, with a plurality of welding seams 16. The welding seams 16 are formed between edges of the body 10 and edges of the cavity 52. The cover 19 is preferably also welded to the cavity 52 by way of welding seams, and preferably such that the cover 19 or the welding seams thereof do not contact the body 10 or the welding seams 16 thereof to avoid hits on the cover being measured by strain measuring sensors (they are to measure strains present in the cavity 52 or the body 10). Moreover, the opening 50 can be such that a recess or indentation 53 is also made so as allow the connection of the cables with the sensor device 3, and this recess or indentation 53 be aligned with a recess or indentation 17 formed on the body 10 also to that end.

The location of the cavity 52 enables the measurement of e.g. lateral strains, corresponding to the X axis illustrated, and vertical strains, corresponding to the Y axis illustrated. Further, this location is also convenient because it is the portion or one of the portions of the adapter with greatest cross-section and volume, thus the formation of a cavity 52 has reduced impact on the resistance of the adapter.

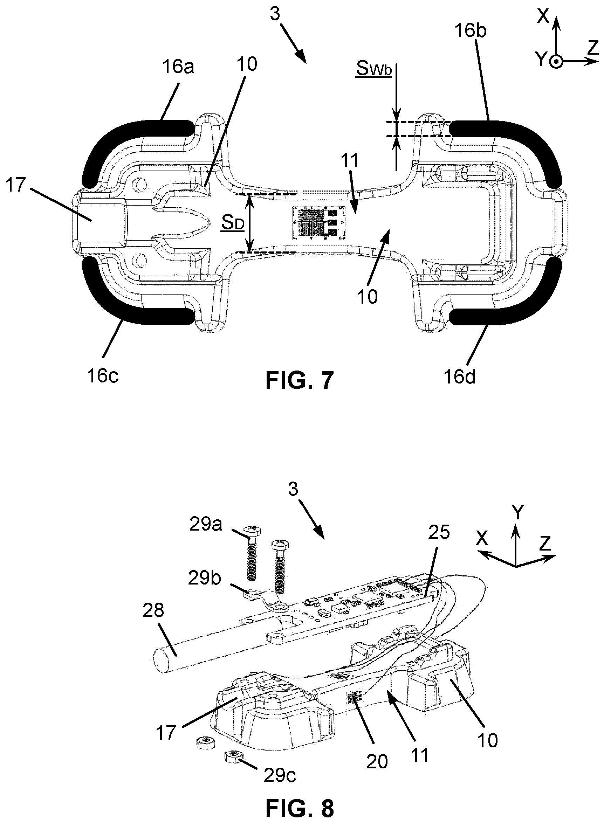

Figure 7 partially shows a sensor device 3 like that shown in Figures 5A, 5B and 6 of wear element assemblies according to embodiments, together with welding seams 16a-16d that are provided between the sensor device and a cavity of a wear element (not illustrated).

Particularly, Figure 7 shows the body 10 from a top view and with a strain measuring sensor 20 attached thereto; although the extensometer 20 illustrated is a strain gauge, it could likewise be a piezoelectric sensor. Additional strain measuring sensors 20 are attached to other faces of the body 10, preferably on planar faces 11; in this sense, two other strain measuring sensors 20 are shown from a side view. On the bottom-most face not seen due to the view of Figure 7, preferably there is at least one more strain measuring sensor, and all the strain measuring sensors are preferably arranged such that the orientation thereof is different but according to

$$\alpha = \frac{n \cdot 360°}{N}$$ with increasing $n$ value from 0 to N-1. The strain measuring sensors are strain gauges.

The welding seams 16a-16d are capable of better withstanding traction and compression forces (transferred thereto from the wear element itself, and prior to transferring them to the sensor device 3) when a sum of thicknesses $S_W$ of the welding seams 16a-16d on all four corners of the sensor device 3 (only the thickness $S_{Wb}$ of welding seam 16b has been illustrated for the sake of clarity) is greater than a thickness $S_D$ of the sensor device 3 at the center-most part thereof, which is the part where the strain gauges are attached to the sensor device 3. This means that the following relationship is preferably fulfilled: $S_D < S_{Wa} + S_{Wb} + S_{Wc} + S_{Wd}$, where $S_{Wa}$, $S_{Wc}$ and $S_{Wd}$ is the thickness of the welding seams 16a, 16c-16d in the other three corners.

The resistance of the at least one body 10 to the forces transferred thereto is greater than the resistance of the plurality of welding seams 16a-16d to the forces transferred thereto. This phenomenon is further exacerbated when the material of the at least one body 10 and the welding seams 16a-16d is taken into account since the steel of the at least one body 10 has superior resistance. Hence, the resistance of the welding seams 16a-16d is greater and better adapted to withstand the forces when a sum of the thicknesses thereof exceeds a thickness of the center-most part of the at least one body 10.

Although the relationship is described with reference to the thicknesses illustrated in Figure 7, i.e. measured coplanar with the Y-Z plane illustrated, the same relationship can alternatively or additionally be fulfilled with thicknesses measured coplanar with the X-Z plane illustrated; in this way, the two thicknesses of the body 10 are those defining the smallest cross-section of the body 10. Preferably, the two relationships (i.e. thicknesses as measured with respect to the X-Z and Y-Z planes) are fulfilled for major withstanding of the forces by the welding seams 16a-16d. It is noted that the thicknesses along one axis may be equal to or different than the thicknesses along another (perpendicular) axis.

Figure 8 partially shows a sensor device 3 like that shown in Figures 5A, 5B, 6 and 7 of wear element assemblies according to embodiments.

Particularly, Figure 8 is an exploded view showing the body 10, a printed circuit board 25 and protector 28 for cables, both of which are to be within a cavity formed between the body 10 and a cover (not illustrated). The PCB 25 and/or the protector 28 can be attached to the body 10 by friction, coupling of matching geometries, or a set of attaching devices 29a-29d such as screws 29a (in which case the PCB 25 includes holes adapted for reception of the screws 29a), clamps 29b, nuts 29c, etc.

Figure 9 shows, in an exploded view, a sensor device 3 like that shown in Figures 5A, 5B, 6, 7 and 8 of wear element assemblies according to embodiments.

The sensor device 3 includes a cover 19 for at least one body 10 of the sensor device 3, and a shell 26 for protecting a cavity between the cover 19 and the at least one body 10.

The cover 19 includes: a first portion 19a, a second portion 19b, and a third portion 19c. The first portion 19a is shaped and dimensioned to cover and protect a top portion of the sensor device. The second portion 19b can be welded to the cavity where the sensor device 3 for attachment of the cover 19 thereto; through the welding seam or seams, the cover 19 transfers to the cavity the loads and tension that it is subjected to, thereby not transferring them to the electronic components of the sensor device 3. In addition, the second portion 19b, which may have two parts (one on each side), is preferably shaped and dimensioned to cover and physically protect one or both side portions of the sensor device 3. The third portion 19c is shaped and dimensioned to make a passageway for cables and/or a protector for cables.

Both the first and the second portions 19a, 19b typically cover strain measuring sensors, thereby protecting them from hits, abrasion, etc., phenomena that are usual during ground engaging operations.

The shell 26 attaches to the at least one body 10, and closes the cavity that exists between it and the cover 19 when arranged thereon. The shell 26 further protects the interior of the cavity from hits and the ingress of water and fines. In addition to closing the cavity, the geometry of the shell 26 may be such that it also extends over sides of the body 10 so as to cover and, thus, protect one or more strain measuring sensors of the sensor device 3.

The shell 26 preferably includes teeth 27 adapted to reliably attach the cover 19 to the shell 26. The teeth 27 increase the friction between the shell 26 and the cover 19; the increased friction reduces detachments of cover 19 by accident, especially during operation of the earth moving machine. In embodiments in which no shell 26 is provided, teeth 27 could be arranged on the at least one body 10 to attain the increased friction.

In some embodiments, the shell 26 is made of a material that is preferably flexible, e.g. an elastomer, rubber, epoxy resin, etc.

Figure 10 shows a wear element 100, particularly the adapter 100, and a wear element assembly according to embodiments.

The adapter 100 includes a cavity 53 formed by way of an opening on an external surface of the adapter 100. The cavity 53 is adapted for receiving a sensor device 3. In some embodiments like in those of Figures 10 and 11, the cavity 53 is adjacent to the means 110 for securing the coupling in the form of a through hole.

The sensor device 3, once introduced in the cavity 53, is fixedly attached thereto by means of welding seams provided between walls of the cavity 53 and a body of the sensor device 3.

One or more cables 70 can extend from the sensor device 3 to other parts of the same wear element 100 and even reach other wear elements or devices of the machine. In this case, the one or more cables 70 are routed towards the through hole of the means 110, where they get introduced and can then exit the means 110 via a through hole formed between the means 110 and the internal surface 105. In this way, the cable or cables 70 are little exposed and can be protected by the wear element 100 itself once the cable or cables 70 extend through the internal surface 105, for example in a manner like the one shown in Figure 4.

Although only one side of the adapter 100 is illustrated in Figure 10, in some embodiments a similar cavity 53 is also arranged on the other side of the adapter 100 and one or more additional sensor devices 3 are introduced therein. In this manner, the axes along which the strain measurements are taken can be distributed among different sensor devices 3, in which case the strain measuring sensors of the different sensor devices 3 are oriented differently, or a multiplicity of sensor devices 3 are provided for redundancy, in which case the strain measuring sensors of the different sensor devices 3 are oriented along the same directions.

With just one sensor device 3, at least four strain measuring sensors are provided therein. Two sensors at e.g. top and bottom faces (relative to the Y' axis illustrated) of a part of the sensor device 3 provide strain measurements, the difference of which indicates straining and/or force relative to the axis along which the two sensors are separated, e.g. the Y' axis illustrated. The two other sensors at e.g. front and bottom faces (relative to the X axis illustrated) of a part of the sensor device 3 provide strain measurements, the difference of which indicates straining and/or force relative to the axis along which the two sensors are separated, e.g. the X axis illustrated. The sum of the strain measurements of all four sensors indicates straining and/or force relative to the remaining axis, e.g. the Z' axis illustrated.

When there are two or more sensor devices 3, each device 3 could have fewer strain measuring sensors and the determination of the force values along one or more axes be based on differences between strain measurements of different sensor devices 3. For example, if another sensor device 3 is arranged on the opposite side of the wear element 100 as represented in Figure 10, the force value along the X axis could be the result of the difference between the strain measurements of one strain measuring sensor of the sensor device 3 illustrated and the strain measurements of one strain measuring sensor of the sensor device not seen because the two strain measuring sensors would be separated along the X axis.

The Y' and Z' axes are own vertical and longitudinal axes of the sensor device 3 and which do not correspond to the vertical and longitudinal axes Y and Z illustrated, which correspond to e.g. Cartesian axes defined for a blade or digging implements that are to receive the wear element 100. In this case, the X axis is common to both the sensor device 3 and the wear element 100. The sensor device 3 is preferably arranged such that measurements in the X, Y' and Z' axes are aligned with lateral, vertical and longitudinal forces withstood by the wear element 100 considering the angle of attack thereof.

Figure 11 shows a wear element 100, particularly an adapter, and a wear element assembly according to embodiments.

The adapter includes a cavity 53 on the side as in Figure 10 but, in these embodiments, it includes two sensor devices 3 per cavity 53 that are apart relative to a vertical axis, the Y axis illustrated of the wear element 100 and the Y' axis illustrated of the sensor devices 3. With the different vertical position of the sensor devices 3, the force values with respect to the vertical axis can be calculated as the difference between the measurements of the strain measuring sensors 20 of both sensor devices 3 so that the distance along the Y' axis between the respective sensors is, in this case, maximized.

A similar cavity 53 can be arranged on the opposite side for more accurate calculation of force values along the Y' axis, and for calculation of force values along the X axis.

Even though in Figures 10 and 11 sensor devices 3 have been illustrated for the measurement of straining in the adapters, it will be noted that strain measuring sensors 20 could be arranged instead directly within the cavity and attached thereto for the measurement of strains. This, however, tends to make the installation of sensors on the wear elements more cumbersome and costly because each sensor must be attached to the wear element, whereas it is the sensor devices the ones that need to be installed when the strain measuring sensors are provided in the sensor devices. The installation of sensor devices is simpler than that of strain measuring sensors owing to the at least one body thereof, which is adapted for attachment to the wear element and the one or more electronic devices might be already embodied thereon by the time the sensor devices are installed. Further, each sensor device may include two or more sensors, for instance four, or eight if additional sensors are provided for temperature compensation, yet only one sensor device needs to be installed each time in contrast to installing each particular sensor. The same holds true for maintenance and repairing tasks, reparation or replacement of sensor devices is easier than the sensors themselves.

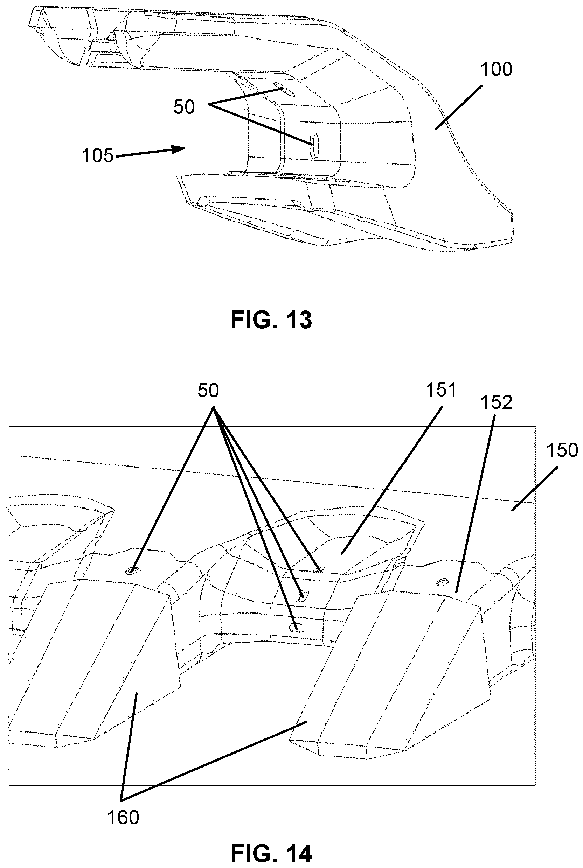

Figure 12 shows several locations where cavities 52 in an adapter may be. Figure 13 shows some of the cavities 52 in a perspective view.

A plurality of openings 50 providing respective cavities 52 are shown for illustrative purposes only, generally only one cavity 52 is enough for strain sensing with a sensor device 1, 2, but multiple cavities 52 and sensor devices 1, 2 might be provided for more accurate measurements.

All but one cavity 52 shown are within an internal surface 105 of the adapter. When the sensor device(s) is arranged within the respective cavity 52, one or more cables 70 are provided and routed towards the back end 102 of the adapter for communication of the measurements or force values provided by one or more electronic devices of the sensor device. When the adapter is mounted on a lip, the cavity or cavities 52 become protected as the openings 50 are obstructed by the lip, and the cable or cables 70 go between the internal surface of the adapter and the external surface of the lip.

Another cavity 52 is provided at the front end 101 of the adapter, on the external surface thereof. At such location, the cables 70 can be routed through a side of the nose of the adapter and, optionally, go then through the means 110, or via a channel (as illustrated) formed within the nose that reaches said means 110. Another channel can be provided from the means 110 towards a back end of the adapter 100 for routing of cabling.

The cabling can go all the way up to the digging implements, the cabin, etc., for instance to an electronic control unit or a wireless communications module that wirelessly transmits the data to other parts of the earth moving machine or to apparatuses remote from the machine, including a control center.

Figure 14 shows a wear element 150, particularly a cast lip, with several locations where one or more openings 50 can be arranged to provide cavities for strain measuring sensors or sensor devices. The same locations are possible on weld-on noses.

Openings 50 can be formed on a nose portion of the cast lip, generally on a top external surface beyond where teeth 160 cover but which will be covered by a wear cap protecting the nose portion and, hence, the cast lip itself, specifically under the shroud elements (not shown in the Figure). The protection that the wear cap confers together with the amount of straining present in the nose portion make such locations adequate for arranging devices for measuring straining.

Additionally or alternatively, one or more openings 50 can be formed on a portion 151 between nose portions where shrouds are intended to be mounted. The portions 151 where shrouds are received have a recess with respect to the rest of the surface of the cast nose, and the opening(s) 50 can be arranged either at the top surface, at the front surface, or at the surface therebetween. When the shroud is mounted, the sensors or sensor devices in any one of these cavities remains protected from fines, impacts, wear, etc.

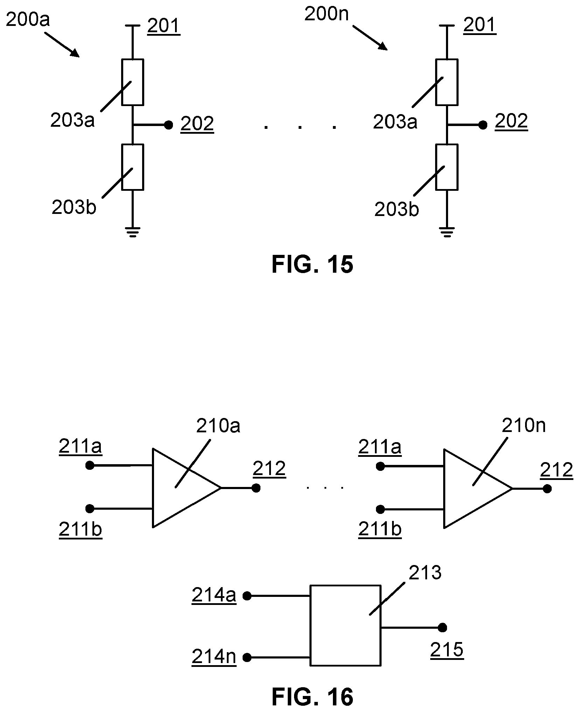

Figures 15-16 diagrammatically show electronic devices for processing measurements and providing force values.

Particularly, Figure 15 shows electronic devices 200a-200n for providing voltages 202 corresponding to the measurements of strain measuring sensors 203a, 203b, which are represented as impedances. The circuits, which are fed at terminal 201, have a strain measuring sensor 203a for measuring the straining based on which force values will be computed in e.g. a voltage divider with another strain measuring sensor 203b preferably arranged perpendicularly on the device or wear element (so as not to measure the deformation that the other sensor 203a measures) for temperature compensation, for instance in a T-rosette strain gauge. The measurement voltage 202 has thus the effect of temperature compensated for. Each electronic device 200a-200n is devoted to the measurements of a different strain measuring sensor, and is configured according to the characteristics of the sensor used. In embodiments in which the effect of temperature is not compensated for, the second strain measuring sensor 203b is generally not present.

With regards to Figure 16, several electronic devices 210a-210n, 213 are shown.

Given the low voltages generally provided by strain measuring sensors, typically below 5 V, the electronic devices 210a-210n are preferably differential amplifiers whereby electrical signals at the input terminal 211a are amplified with respect to the electrical signals at the other input terminal. A differential amplified electrical signal is provided at the output terminal 212, so the subtraction of the electrical signals at the input terminals 211a, 211b is provided together with an amplification of the resulting subtraction.

The electrical signals at the input terminals 211a, 211b can be the measurements of two different strain measuring sensors (e.g. the voltages 202 of Figure 15) that measure the straining with respect to a same axis and which output electrical signals with similar voltage; alternatively, they can be the measurement of a strain measuring sensor and a predetermined reference voltage, for instance around 1,0 V. The latter case is for amplification of the measurement and increase the dynamic range thereof having regard that the measurements may not use the full dynamic range of the strain measuring sensors because the deformation of a wear element are microdeformations; by way of example, the measurements when the sensors are arranged in an adapter are e.g. around 1,1 V and 0,9 V. The straining is representative of a traction for voltages above 1,0 V, and representative of a compression for voltages below 1,0 V.

The electronic device 213 is a module for combination of the electrical signals at the inputs 214a-214n, which produces an electrical signal at the output 215 corresponding to e.g. a sum of the inputs 214a-214n, an average of the inputs 214a-214n, etc. With the electronic device 213, the value/s of a difference between measurements of strain measuring sensors and/or force applied to a wear element may be computed when several strain measuring sensors are arranged to measure straining according to axes corresponding to e.g. lateral and vertical strains, with the force being in an axis different than the axes of lateral and vertical strains, thus being the force corresponding to e.g. the longitudinal strain. For an accurate combination of the electrical signals, preferably the amplified measurements are inputted to the electronic device 213, the amplification using a predetermined reference voltage as reference for the differential amplification, not the differentiation with respect to another strain measurement since that would mask the force applied in the third axis due to the differences in straining between pairs of sensors being zero or close to zero.

Although not illustrated, the electrical signals at the output terminals 212, 215 are preferably provided to another electronic device that converts the force value within the electrical signals to a meaningful value, namely the electrical signals go through a calibration stage for provision of a numerical value quantifying the force in each respective axis.

In these examples, the electronic devices of Figures 15 and 16 are parts of electric circuits that work with analog signals. In other examples, the electronic devices are one or more digital processors (e.g. microcontrollers, digital signal processors, processing units, etc.) that receive the measurements of the strain measuring sensors after having gone through an analog-to-digital converter, and process the measurements digitally so as to provide the force values as digital data.

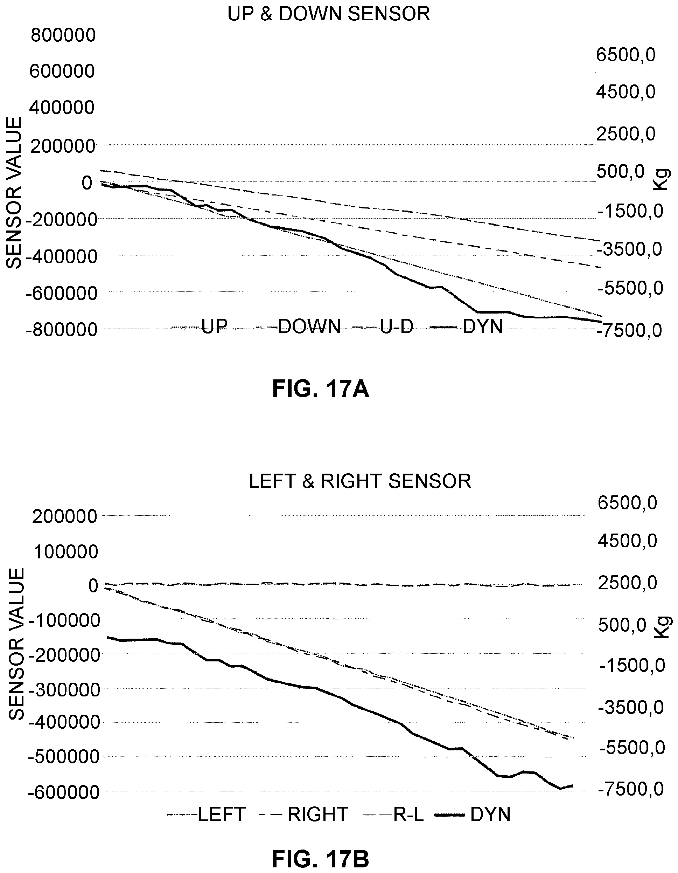

Figures 17A-17B shows an example of strain measurements of strain measuring sensors according to embodiments.

In this example, the strain measuring sensors are arranged in a wear element like an adapter, and a vertical force is applied to a tooth mounted on the adapter at a location close to the ground-engaging end of the tooth; the force is applied from the top.

Figure 17A shows the strain measurements of top and bottom sensors, which are spaced apart relative to the vertical dimension, whereas Figure 17B shows the measurements of lateral sensors, which are spaced apart relative to a horizontal dimension. The bottom sensor is preferably the one closer to the terrain when the earth moving machine operates.

A first curve is represented showing the force as measured by a dynamometer applied to the tooth, which increases progressively over time (X axis). The force applied is shown as kilograms of force in the Y axis on the right side of the graph.

As it can be seen, the strain measured by the top and bottom sensors is indicative of a compression. The difference between the two measurements makes possible to determine existence of a vertical force (e.g. along the Y or Y' axis of Figures 10 and 11) applied from the bottom because there is more compression measured by the bottom sensor than the top sensor. The value of the force is derivable from the magnitude of the difference. The force value can be provided using calibration values.

Straining is also measured by both lateral sensors since the microdeformation of the adapter is not just vertical, rather the force applied to the tooth also microdeforms the adapter along the longitudinal axis. This phenomenon is more common when the force produces a larger torque. The strain measuring sensors measure said microdeformation; the type of microdeformation is the same, compression in this case. The difference between the measurements of both sensors is close to zero, which means that there is no horizontal force applied to the wear element.

Further, the force corresponding to the longitudinal axis (e.g. along the Z or Z' axis of Figures 10 and 11) can also be measured. In this case, all four sensors are measuring microdeformation in the form of compression, which means that there is a compression along the longitudinal axis. The sum of the measurements of all four sensors will provide a value for the force in this axis. Again, by having calibration values, the result of the sum will indicate how much force has been applied; alternatively, the average can also be calculated and calibrated.

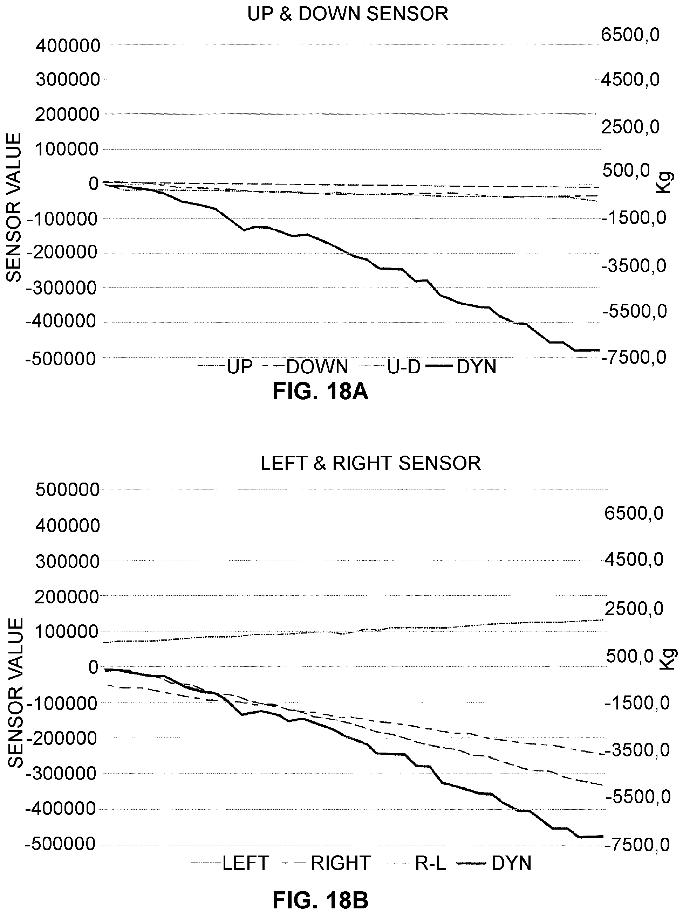

Conversely, Figures 18A-18B show another example in which the same configuration is provided but the force applied to the tooth is a lateral force (e.g. along the X axis of Figures 10 and 11). In this case, tractive and compressive microdeformations are picked up and measured by the lateral sensors. The top and bottom sensors likewise measure a small straining despite the force being lateral, however their magnitude and type are such that it can be determined that the main force applied to the tooth is lateral.

In this example, the sensor on the left measures a tractive microdeformation, and the sensor on the right measures a compressive microdeformation. Left and right can be established by looking at the wear element from the front, which is the end closest to the terrain when the earth moving machine engages ground, or from the back. The side with more traction, or lower compression, is the side that the force is coming from. Hence, the force is being applied from left to right in the present example.

Although Figures 17A, 17B, 18A and 18B describe an example with strain measuring sensors that are located up, down, left and right, which can be considered as an angular arrangement of e.g. 0°, 90°, 180° and 270° or similar values, it will be understood that other arrangements are possible as well, for instance but without limitation, an angular arrangement of e.g. 25°, 115°, 205° and 295° or similar values, or e.g. 45°, 135°, 225° and 315° or similar values. Further, additional strain measuring sensors are possible as well.

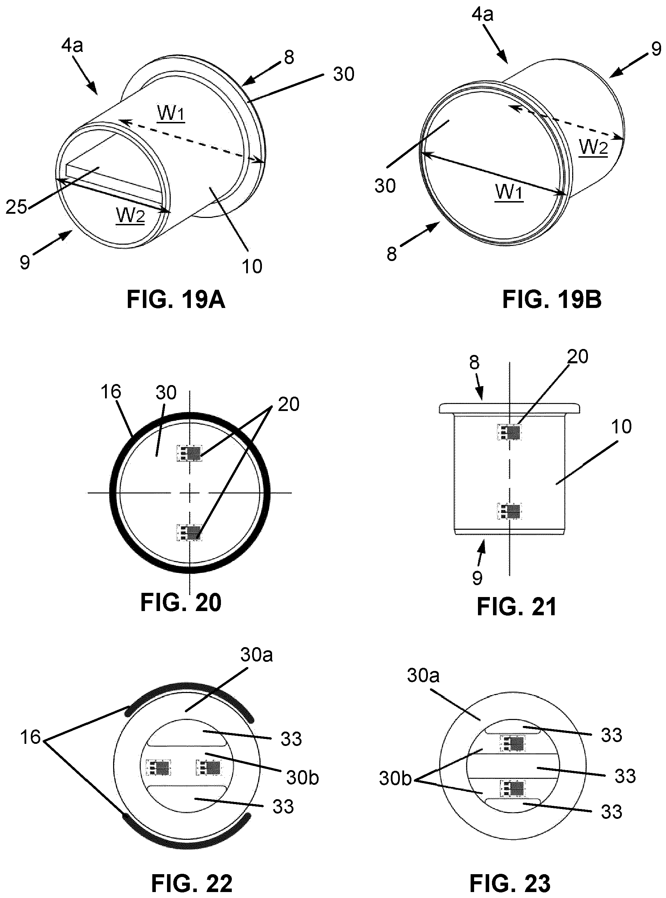

Figures 19A-19B shows a sensor device, or part thereof, according to embodiments from two different perspective views.

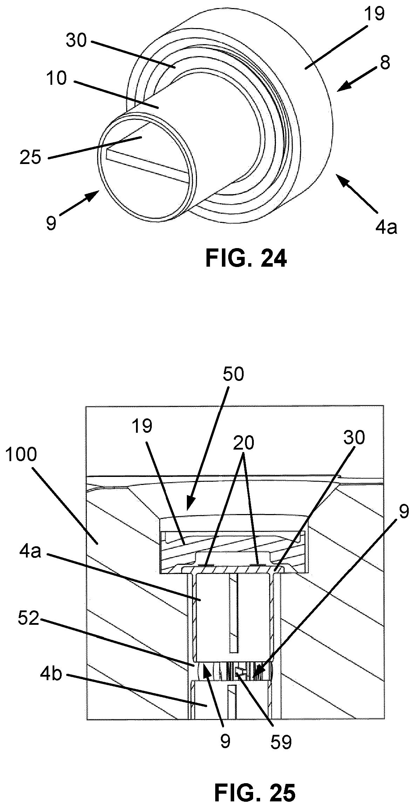

The sensor device may be formed by two identical or similar parts 4a of a sensor device as that illustrated. A sensor device formed by two parts is, for example, shown in Figures 25, 28 and 29. Alternatively, the sensor device may also be formed by a single part, like that illustrated. The choice of one or more parts may depend upon the arrangement of said sensors on the sensor device, especially in what regards positioning and spacing, so that measurement of strains along two different axes is made possible.

The sensor device has at least one hollow body 10, which could be one body or several bodies coupled together. In embodiments in which the sensor device is split in two or more parts, there are at least as many bodies as parts there are.

The body 10 illustrated in Figures 19A-19B is wider at a first end 8 than at other parts of the body 10, and especially at a second end 9 opposite the first end 8 as shown with arrow lines $W_1$ and $W_2$; that is to say, in this case the diameter of the body at the first end 8 is greater than the diameter of the body at the second end 9. The body 10 includes a base 30 at the wider end.

The base 30 may be cap-shaped or the like, thereby forming a stopper that forbids full insertion of the sensor device 4 within a cavity dimensioned according to the narrower part of the sensor device 4. The base 30 has no spaces between portions thereof, like in the embodiments of Figures 19A-19B, or has different portions with one or more spaces (i.e. grooves, holes) therebetween, like in the embodiments of Figures 22 and 23.

The body 10 is able to host electronics like e.g. electronic devices for measurement processing, at least one PCB 25, energization means, etc. To that end, the body 10 is suitably long and wide for insertion of the electronics. The hollow space can be filled with elastomeric material with e.g. a potting process so as to further protect the devices therein from fines, humidity and other particles, and it may also buffer the strains.

In this example, the body 10 has a circular cross-section, but other geometries for the cross-section are possible within the scope of the present disclosure, including, rectangular, oval, hexagonal, etc. Moreover, the sensor device and/or the body 10 may be provided with at least one poka-yoke to force a particular orientation of the part 4a of the sensor device when inserted in a cavity.

The body 10 and the sensor device of these and other embodiments may have one or two symmetry axes, as illustrated for example in Figures 20 and 21, or have no symmetry axes at all.

Arrangement of strain measuring sensors on the sensor device or parts thereof will be described in relation to Figures 20-23.

Figure 20 shows part of a sensor device according to embodiments like the sensor device of Figures 19A and 19B. A side view showing the base 30 is illustrated.

The strain measuring sensors 20 are arranged on the base 30, in this example on an outermost surface of the sensor device. In other embodiments, the strain measuring sensors 20 are arranged on the opposite surface of the base 30, thus facing towards the inside of the sensor device.

The strain measuring sensors 20 are preferably as apart as possible, even though arranging them close to the edge of the base 30 may preferably be avoided to reduce the level of damage they can suffer when attaching the sensor device to the wear element.

At least two identical or similar parts as that illustrated in Figure 20 form the sensor device to enable measurement of strains with respect to an axis perpendicular to the illustrated vertical axis along which the two strain measuring sensors 20 are arranged on Figure 20.

A perimetral welding seam 16 is shown for the sake of the representation. The perimetral welding seam 16 attaches the part of the sensor device to a wear element. The welding seam does not need to be perimetral, and may have multiple welding seams and not a single one.

Figure 21 shows a sensor device, or part thereof, according to embodiments like the sensor devices of Figures 19A and 19B. The sensor device is illustrated from a side thereof.

The strain measuring sensors 20 are arranged on a side of the illustrated body 10 along a length thereof such that the distance of each strain measuring sensor 20 to one end is less for one sensor 20 than for the other 20.

In some cases, one or more further pairs of strain measuring sensors 20 can be arranged on the perimeter of the body 10, for example arranged at the other end of the diameter of body. When one or more additional pairs of strain measuring sensors 20 are arranged for measuring strains along additional axes, a single part may form the sensor device.

Figures 22 and 23 show parts of sensor devices according to embodiments like the sensor devices of Figures 19A and 19B.

In these embodiments, the base has multiple portions 30a, 30b integrally formed (or, in some embodiments, multiple parts that are mechanically coupled together) with some grooves 33 therebetween that provide spaces. The grooves 33 improve directing strains to the strain measuring sensors, and reduce welding temperatures that could, otherwise, damage the strain measuring sensors in those cases in which the sensor device 4 is attached to a wear element by way of welding.

By way of example, some welding seams 16 are illustrated in Figure 22, which are intended to attach the base to a wear element; if the welding seams 16 are, in this example, provided only in part of the perimeter of the ring portion 30a that is adjacent to grooves 33, particularly the part of the perimeter that is radially aligned with the grooves 33. The grooves 33 reduce the temperature reaching the strain measuring sensors 20 during the welding process.

The strain measuring sensors 20 are arranged on either an outermost or an innermost surface of the parts 30b that are connected to the ring-shaped part 30a.

Figure 24 shows a sensor device, or part 4a thereof depending on how the strain measuring sensors are arranged thereon and how many.

The sensor device or its part 4a is similar to that of Figures 19A and 19B, but including a cover 19 arranged on one end 8 thereof, particularly at the wider end of the at least one body 10.

The cover 19 protects the body 10 and adds another protection level to the electronics within the sensor device. The cover 19 can be attached to the surface of the wear element, for example the cavity itself, or in the proximity of an end of a cavity of the wear element is formed with one or more of welding seams, e.g. an opening where the cavity is formed, a surface adjacent to the cavity, etc.

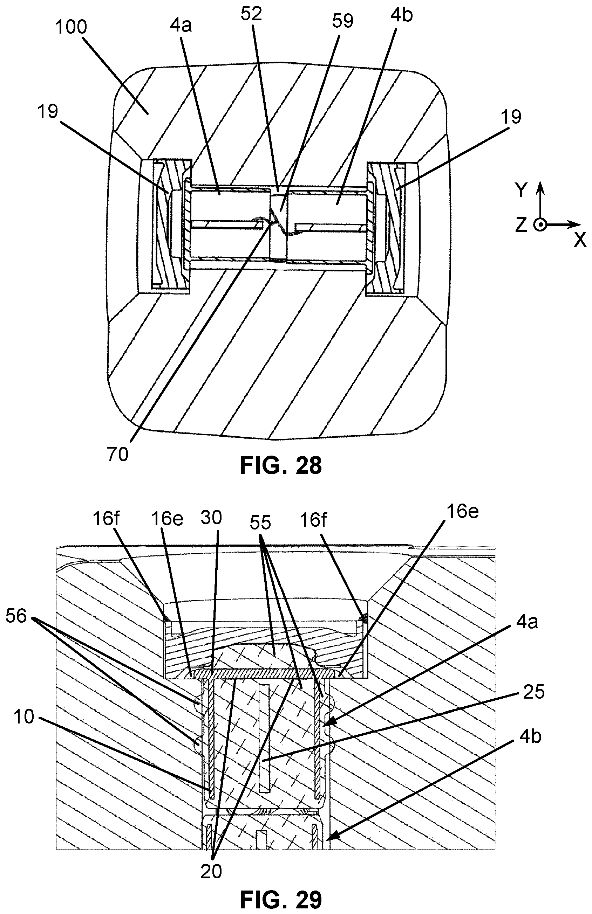

In some embodiments, a flexible and/or soft protective member is arranged between the cover 19 and the body 10 so that hits on the cover 19 are not directly transmitted to the body 10, and if any load is to be exerted on the body 10 (e.g. compression), it is in a muffled manner owing to the deformation suffered by the flexible and/or soft protective member. The material of the protective member may be any known in the art, including materials that can be used in a potting process as in, some embodiments, the sensor device or the parts thereof are filled with material by way of a potting process. In this regard, in some embodiments, parts of the sensor device or the body of the sensor device are/is introduced (with any electronics already arranged therein) in a mold, and filled with material by way of a potting process to fill all free space therein as illustrated in Figure 29.

Figure 25 shows a sensor device arranged in a wear element in accordance with embodiments.

The sensor device has two parts 4a, 4b that, in these embodiments, are arranged within a same cavity 52 of the wear element 100, even though in other embodiments they could be arranged in different cavities. The cavity 52, in this example, can be a through hole.

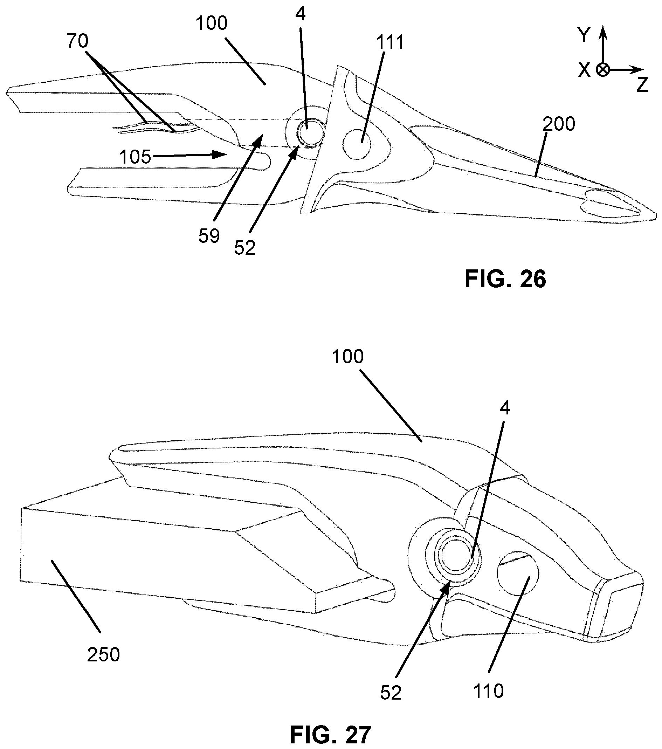

The cavity 52 may be, for example but without limitation, that shown in Figure 26, or any of the shown in Figures 10-14, either as blind hole or through hole.

A further cavity or through hole 59 can be arranged within the cavity 52 where the sensor device 4a, 4b is arranged that enables routing of one or more cables to other locations of the earth moving machine when the sensor device 4 has or is coupled with one or more cables for transmission and/or reception of data, such as the strain measurements and/or force values, if any force values are calculated.

The two parts 4a, 4b are identical in this example, but arranged one flipped with respect to the other. The parts 4a, 4b each include a respective cover 19 that can also be within the cavity 52; each such cover 19 is preferably welded to the opening 50. In other embodiments, the sensor device is formed with a single part (single body or multiple bodies coupled together) that preferably at least extends from one end of the cavity to the other, and with a cover 19 arranged at each of the two ends.

Strain measuring sensors 20 are preferably as apart as possible along a vertical axis of this Figure, and as apart as possible along a horizontal axis of this Figure, to improve the accuracy of the calculated forces. In these embodiments, the strain measuring sensors 20 are arranged on an external surface of the respective base 30.

Figure 26 shows a cavity 52 in a wear element for sensor devices according to embodiments.

The wear element, in this case an adapter 100, is shown with a tooth 200 attached thereto. The tooth 200 is fixedly attached to the adapter 100 at least by way of means for fixing such as a pin introducing in a pin-receiving hole 111 of both the adapter 100 and the tooth 200.

The cavity 52 is arranged next to the hole 111 of the adapter 100, at a side towards digging implements rather than a side towards the tooth 200. The cavity 52 is thus arranged at a position somewhere between the hole 111 and the internal surface 105.

This cavity arrangement is convenient because it generally directs strains in the direction of a frontal axis (Z axis illustrated) better than cavities in other arrangements, thereby improving the intensity with which the strains are measured, in turn improving the force calculation along this axis.

The cavity 52 may be connected to the cavity or though hole 59 that reaches an inner part of the adapter 100 and through which one or more cables 70 can be routed if wired data communications are used.

A shape of the cavity 52 is preferably identical or similar to the at least one body of the sensor device 4, or slightly bigger in size, so as to let the at least one body be positioned inside. As the wider end of the body or bodies can be bigger than the cross-section of the cavity 52, the wider end does not let the sensor device to be introduced in the cavity 52, hence effectively functioning as a stopper. The sensor device 4 may thus be positioned flush (or almost flush) with the external surface of the adapter 100 where the cavity 52 is formed, as seen in Figure 25.

Figure 27 shows a wear element 100 with a

The wear element 100 with the sensor device 4 of Figure 26, but showing a different representation for the sake of clarity, particularly without the tooth 200 but with the lip 250 engaged at the internal surface 105.

Figure 28 shows a cross-section of a wear element 100 showing a cavity 52 according to embodiments.

The wear element 100 includes the sensor device 4 in the cavity 52, and the cross-section corresponds to another representation of the embodiments of Figures 26 and 27 for the sake of clarity. The cross-section is taken through a plane corresponding to the broken line of Figure 26. The axes illustrated are in correspondence with those of Figure 26.

The sensor device is made up of two parts 4a, 4b. One or more cables 70 are shown between the two parts 4a, 4b, and a second cavity or though hole 59 for routing them towards other parts of the machine, like e.g. a cabin, or someplace else, where e.g. an electronic device for processing the data is arranged, like for calculating force values.

As it can be observed, the covers 19 reach or are close to an external surface of the adapter 100. When the adapter is subjected to impacts from the excavated material, the material hitting the adapter 100 hits the cover 19, thereby reducing the intensity of the loads that reach the sensor device and the components thereof, in turn increasing their useful life. The intensity of the loads reaching the sensor device is even lower when a flexible and/or soft material is interposed between the cover 19 and the body 10, as shown in Figure 29.

Figure 29 shows a sensor device with two parts 4a, 4b, in a cavity, according to embodiments.

The sensor device can be any of Figures 19A-29. Each part 4a, 4b has flowable material 55 therein introduced by way of a potting process, thereby reducing or removing any free space there may be within each body 10. Some flowable material 55 may also be present between the base 30 and the cover 19.

The potting is preferably conducted outside of the cavity, particularly with the part 4a, 4b or the entire body within a mold to be filled with the flowable material 55. The mold may be configured to feature recesses that provide the sensor device with projecting members or ribs 56 that may surround the whole perimeter of the respective body. Such projecting members or ribs 56 improve the attachment of the sensor device within the cavity by providing additional friction between the two. As the projecting members or ribs 56 are flexible, the parts 4a, 4b of the sensor device are inserted in the cavity applying pressure to be slid in.

In this Figure there is also illustrated that the base 30 of each part 4a, 4b may be welded to the wear element. One or more welding seams 16e are provided between the base 30 and, in this case, the surface of the opening where the cavity is formed.

Additionally, the cover 19 is also welded to the wear element by way of welding seams 19f.

In the illustrated embodiments, the strain measuring sensors 20 are arranged in an internal surface of the respective base 30.

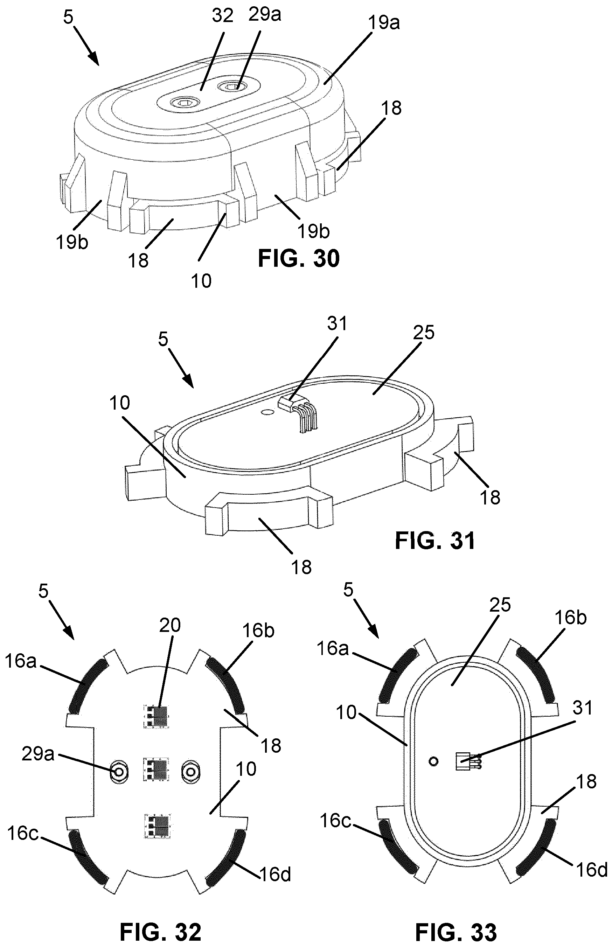

Figure 30 shows a sensor device 5 according to embodiments.

The sensor device 5 at least includes at least one body 10, a cover preferably formed by first and second portions 19a, 19b, and a plurality of strain measuring sensors, which are not seen in this Figure. The sensor device 5 may also include at least one printed circuit board, a sensor, such as a Hall effect sensor, and/or other parts or components as described with reference to Figures 31-33.

The first portion 19a of the cover is intended to cover at least part of the at least one body, and the second portion 19b are extensions intended to protrude sufficiently from the first portion 19a so as to make the cover not to contact the at least one body. Upon attaching the cover to, preferably, the wear element, there is some gap between the cover and the at least one body, thereby not transferring hits from the cover to the body. By being of a weldable material, the second portion 19b can be welded to the wear element.

The cover may include a cutout or window where a separate protective member 32 may be arranged, and attached thereto with e.g. screws 29a or any other means known in the art. The protective member 32 is preferably transparent to electric fields and/or magnetic fields so as to let them through; the material of the protective member 32 is e.g. polycarbonate.

Figure 31 shows part of a sensor device like that of Figure 30.

The illustrated part is the at least one body 10, at least one printed circuit board 25, and a Hall effect sensor 31, which is useful for fall detection of wear elements when a magnet is arranged on the wear elements whose presence is to be monitored. Fields measurable by the Hall effect sensor 31 can be received through the protective member 32. If the sensor device were to include, additionally or alternatively, a wireless communications module, data transmission and reception could be effect through the protective member 32 as well.

The at least one body 10 includes one or more welding chamfers 18 for attachment thereof to the wear element, by means of one or more welding seams such as welding seams 16a-16d shown in Figures 32 and 33. The welding chamfers 18 are preferably apart for the second portion 19b of the cover to be able to reach the surface of the wear element.

Figure 32 shows part of a sensor device like that of Figures 30-31.

The illustrated part is the body 10 with a plurality of strain measuring sensors 20 arranged thereon. In this embodiment, there are three strain measuring sensors 20; for example but without limitation, the two sensors 20 closest to the ends of the body 10 may be arranged for enabling calculation force values in at least two different axes, and the sensor 20 closest to the center of the body 10 may be arranged for enabling calculation of shear forces or stresses.

The face of the body 10 illustrated may be either the one closest to the wear element (the bottom-most in Figure 31), or the opposite one (higher up in Figure 31, and between the bottom-most and the PCB 25).

One or more e.g. screws 29a may be used to attach the PCB to the body 10.

Welding seams 16a-16d are shown adjacent to each welding chamfer 18; each welding seam attaches the body 10 to the surface of the wear element.

Figure 33 shows part of a sensor device like that of Figures 30-32.

The illustrated part is that closest to the cover, and it features the PCB 25 with the Hall effect sensor 31, the body 10 beneath the PCB 25, the welding chamfers 18 and the welding seams 16a-16d.

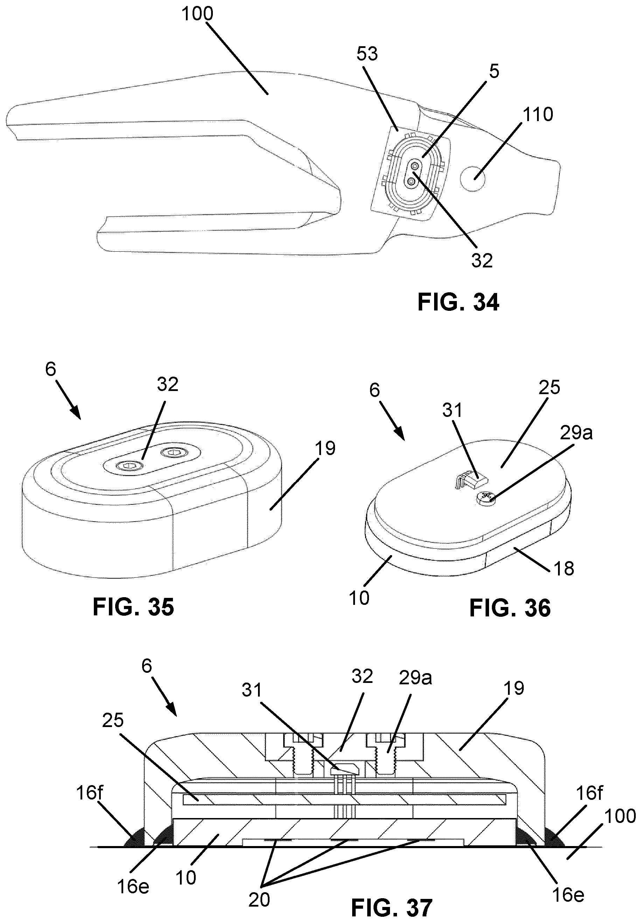

Figure 34 shows a wear element, particularly an adapter 100, with a sensor device 5 like that of Figures 30-33.

The arrangement of the sensor device 5 is similar to that of Figure 11, with the attachment of the sensor device 5 to the cavity 53 of the adapter 100 on sides thereof. The sensor device 5 preferably comprises two parts, one on each side of the adapter 100, thus only one part of the sensor device 5 is illustrated in Figure 11. Each part includes its respective body (or bodies), strain measuring sensors, cover, Hall effect sensor (if any), and electronics for processing measurements of the sensors. The processed measurements of the different parts of the sensor device 5 may then be processed together in one of the parts of the sensor device 5, or in a different device remote from the sensor device 5.

Figure 35 shows a sensor device 6 according to embodiments.

The sensor device 6 at least includes at least one body and a plurality of strain measuring sensors, which are not seen in this Figure, and a cover 19. The sensor device 6 may also include at least one printed circuit board, a sensor, such as a Hall effect sensor, and/or other parts or components as described with reference to Figures 36 and 37.

The cover 19 includes the protecting member 32 in a cutout of the cover 19 to let through electric fields and/or magnetic fields into the sensor device 6, and out from the sensor device 6.

Figure 36 partially shows a sensor device 6 like that of Figure 35.

The illustrated part of the sensor device 6 is the body 10, together with the PCB 25 attached thereto by way of e.g. one or more screws 29a. The device 6 includes a Hall effect sensor 31.

The strain measuring sensors can be arranged on the face closest to the wear element (the bottom-most in Figure 37), or the opposite one (higher up in Figure 37, and between the bottom-most and the PCB 25).

Welding chamfers 18 may also be provided on the body 10.

Figure 37 shows a cross-section of a sensor device 6 like that of Figures 35-36.

In this embodiment, the strain measuring sensors 20 are arranged in a surface of the body 10 closest to the surface of the wear element, e.g. adapter 100. As shown, a recess can be provided in that portion of the body 10 to avoid direct contact between the sensors 20 and the surface of the wear element. Welding seams 16e are provided between the body 10 and the cover 19 for reliable attachment of one to the other. Further, welding seams 16f are provided between the cover 19 and the adapter 100 for reliable attachment of one to the other.

In this text, the term "includes", "comprises" and their derivations (such as "including", "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the scope of the invention as defined in the claims.

**Claims**

1.  A sensor device (1-6) for an earth moving machine, comprising: at least one body (10); a first plurality of strain measuring sensors (20) arranged on one or more bodies of the at least one body such that the first plurality of sensors measures strains that enable provision of force values in at least two different axes (X, Y, Y'), where the first plurality includes at least four strain measuring sensors (20); **characterised by** one or more electronic devices (210a-210n, 213) configured to provide, for at least two different axes (X, Y, Y'), a difference between measurements of two different strain measuring sensors of the first plurality for each axis of the at least two different axes.

2.  The sensor device of claim 1, wherein the at least two different axes comprises first, second and third axes (X, Y, Y', Z, Z'), the one or more electronic devices (210a-210n, 213) are configured to provide a combined measurement of some or all strain measuring sensors (20) of the first plurality for the third axis (Z, Z').

3.  The sensor device of any one of the preceding claims, wherein the one or more electronic devices (210a-210n, 213) are configured to provide force values in the at least two different axes (X, Y, Y'), where the force value in each axis is provided based on the difference of the measurements for each axis.

4. The sensor device of any one of the preceding claims, further comprising a lid (60) or a cover (19) coupled with a body of the at least one body (10) or is couplable with a wear element where the sensor device is to be arranged on, such that a cavity is formed between the body and the lid (60) or cover (19), and the one or more electronic devices (210a-210n, 213) are introduced in said cavity.

5. The sensor device of any one of the preceding claims, wherein the at least one body (10) includes edges adapted for attachment of the sensor device to a cavity of a wear element by welding.

6. The sensor device of any one of the preceding claims, wherein each of the strain measuring sensors (20) of the first plurality is arranged on a body of the at least one body (10) with an orientation of $\alpha = \frac{n \cdot 360°}{N}$ relative to a first face of the at least one body and with a different value for *n,* where *n* is a natural number taking a value ranging from 0 to N-1, and N being equal to the number of strain measuring sensors in the first plurality.

7. **The** sensor device of any one of the preceding claims, wherein:

the at least one body (10) is a single body comprising a cavity or a through hole (12) that makes the sensor device hollow or the at least one body comprises a plurality of bodies coupled therewith such that a cavity or a through hole (12) is formed that makes the sensor device hollow;
the at least one body (10) comprises a plurality of channels (13) formed on an external part of the at least one body, each channel being formed between two external faces (11) of the at least one body;
the one or more electronic devices (25, 210a-210n, 213) are introduced in the cavity or the through hole of the at least one body;
the strain measuring sensors (20) of each plurality are arranged on one or more external faces (11) of the at least one body; and
each strain measuring sensor comprising one or more cables (15), each of the one or more cables of each strain measuring sensor extending between the one or more electronic devices and the respective strain measuring sensor with a portion of the cable extending through one channel of the plurality of channels.

8. A wear element assembly for digging implements of an earth moving machine, comprising:

a wear element (100) comprising a cavity (52, 53), the wear element being at least adapted for coupling with the digging implements and/or another wear element for digging implements; and
a sensor device (1-6) according to any one of the preceding claims; and
means for attaching (16, 55) the sensor device to an interior of the cavity.

9. The wear element assembly of claim 8, wherein the at least one body (10) is of 30CrNiMo8 or 42CrMo4.

10. The wear element assembly of any one of claims 8-9, wherein the means for attaching (16, 55) comprise a plurality of welding seams (15) between the at least one body (10) of the sensor device and the cavity (12, 13) of the wear element (100).

11. The wear element assembly of claim 10, wherein the plurality of welding seams (16) comprises four welding seams, each welding seam being arranged on a different corner of the at least one body (10), and wherein a sum of thicknesses ($S_W$) of the four welding seams is greater than a thickness ($S_D$) of the at least one body of the sensor device on a center-most part thereof.

12. The wear element assembly of any one of claims 10-11, wherein:

the sensor device further comprises a cover (19) comprising steel material, the cover being coupled with the at least one body (10) or the wear element such that a cavity is formed between the cover and the at least one body (10);
the at least one body of the sensor device is a single body contacting the cavity (52, 53) of the wear element (100);
the one or more electronic devices (25, 210a-210n, 213) are introduced in the cavity formed between the cover and the at least one body; and
the strain measuring sensors (20) of each plurality are arranged on one or more external faces (11) of the at least one body.

13. The wear element assembly of claim 12, wherein the cover (19) has a geometry such that, when the cover is coupled with the at least one body (10) or the wear element (100), it covers some or all strain measuring sensors (20) of each plurality for protection thereof.

14. The wear element assembly of claim 8, wherein the means for attaching (16, 55) comprise material (16) at least partially filling the cavity (52, 53) with the sensor device introduced in the cavity.

15. The wear element assembly of any one of claims 8-14, wherein the cavity (52) is formed adjacent to a hole or through hole adapted to receive fixing means for attaching the wear element to another wear element, and the cavity (52) is parallel to the hole or through hole for fixing means.

**16.** A method comprising:

introducing a sensor device (1-6) inside a cavity (52, 53) of a wear element (100) for digging implements of an earth moving machine; arranging a first plurality of strain measuring sensors (20) on one or more bodies of at least one body (10) of the sensor device, where the first plurality includes at least four strain measuring sensors (20); attaching the sensor device to the cavity when the sensor device is introduced therein; measuring strains on the at least one body (10) with the strain measuring sensors of the first plurality; and providing, with one or more first electronic devices, force values in the at least two different axes (X, Y, Y'), where the force value in each axis is provided based on measurements of two different strain measuring sensors of the first plurality.

**17.** The method of claim 16, further comprising providing, with one or more second electronic devices (210a-210n, 213), force values in the at least two different axes (X, Y, Y'), where the force value in each axis is provided based on the differences between the measurements of the two different strain measuring sensors (20).

**18.** The method of any one of claims 16-17, wherein the first electronic devices are remote from the sensor device (1-6).

**19.** The method of any one of claims 16-18, wherein the sensor device (1-6) is a sensor device according to any one of claims 1-7.

**20.** The method of any one of claims 16-19, further comprising:

coupling a cover (19) including steel material on the at least one body (10) or the wear element (100) such that a cavity is formed between the cover and the at least one body, the at least one body is a single body contacting the cavity (52, 53); and introducing the one or more electronic devices (25, 210a-210n, 213) in the cavity formed between the cover and the at least one body; and wherein in the step of arranging the strain measuring sensors (20) of the first plurality the strain measuring sensors are arranged on one or more external faces (11) of the at least one body.

**21.** A wear element (100) for digging implements of an earth moving machine, comprising:

one or more cavities (52, 53); a first plurality of strain measuring sensors (20), each sensor being arranged in a cavity of the one or more cavities, where the first plurality includes at least four strain measuring sensors, the arrangement of the first plurality of sensors being for measuring strains that enable provision of force values in at least two different axes (X, Y, Y'); means for attaching (16, 55) each strain measuring sensor of the first plurality to the respective cavity; and one or more electronic devices (210a-210n, 213) configured to provide, for at least two different axes, a difference between measurements of two different strain measuring sensors (20) of the first plurality for each axis of the at least two different axes (X, Y, Y').

**22.** The wear element of claim 21, wherein the one or more electronic devices (210a-210n, 213) are configured to provide force values in at least two different axes (X, Y, Y'), where the force value in each axis is provided based on the differences between the measurements of the two different strain measuring sensors (20).

**23.** An earth moving machine comprising:

digging implements; and one or more sensor devices according to any one of claims 1-7 and/or one or more wear element assemblies according to any one of claims 8-15; or one or more wear elements according to any one of claims 21-22.

**Patentansprüche**

**1.** Sensorvorrichtung (1-6) für eine Erdbewegungsmaschine, aufweisend: mindestens einen Körper (10); eine erste Vielzahl von Dehnungsmesssensoren (20), die auf einem oder mehreren Körpern des mindestens einen Körpers so angeordnet sind, dass die erste Vielzahl von Sensoren Dehnungen misst, die die Bereitstellung von Kraftwerten in mindestens zwei verschiedenen Achsen (X, Y, Y') ermöglichen, wobei die erste Vielzahl mindestens vier Dehnungsmesssensoren (20) umfasst; **gekennzeichnet durch** eine oder mehrere elektronische Vorrichtungen (210a-210n, 213), die dazu ausgebildet sind, für mindestens zwei verschiedene Achsen (X, Y, Y') eine Differenz zwischen den Messungen von zwei verschiedenen Dehnungsmesssensoren der ersten Vielzahl für jede Achse der mindestens zwei verschiedenen Achsen bereitzustellen.

2. Die Sensorvorrichtung nach Anspruch 1, wobei die mindestens zwei verschiedenen Achsen eine erste, zweite und dritte Achse (X, Y, Y', Z, Z') aufweisen, wobei die eine oder mehrere elektronischen Vorrichtungen (210a-210n, 213) dazu ausgebildet sind, eine kombinierte Messung einiger oder aller Dehnungsmesssensoren (20) der ersten Vielzahl für die dritte Achse (Z, Z') zu liefern.

3. Die Sensorvorrichtung nach einem der vorstehenden Ansprüche, wobei die eine oder mehreren elektronischen Vorrichtungen (210a-210n, 213) dazu ausgebildet sind, Kraftwerte in den mindestens zwei verschiedenen Achsen (X, Y, Y') zu liefern, wobei der Kraftwert in jeder Achse auf der Grundlage der Differenz der Messungen für jede Achse bereitgestellt wird.

4. Die Sensorvorrichtung nach einem der vorstehenden Ansprüche, die ferner einen Deckel (60) oder eine Abdeckung (19) aufweist, die mit einem Körper des mindestens einen Körpers (10) gekoppelt ist oder mit einem Verschleißelement gekoppelt werden kann, auf dem die Sensorvorrichtung angeordnet werden soll, so dass zwischen dem Körper und dem Deckel (60) oder der Abdeckung (19) eine Kavität gebildet wird, und die eine oder mehrere elektronischen Vorrichtungen (210a-210n, 213) in die Kavität eingeführt sind.

5. Die Sensorvorrichtung nach einem der vorstehenden Ansprüche, wobei der mindestens eine Körper (10) Ränder aufweist, die zur Befestigung der Sensorvorrichtung an einer Kavität eines Verschleißelements durch Schweißen ausgelegt sind.

6. Die Sensorvorrichtung nach einem der vorstehenden Ansprüche, wobei jeder der Dehnungsmesssensoren (20) der ersten Vielzahl auf einem Körper des mindestens einen Körpers (10) mit einer Ausrichtung von $\alpha = \frac{n \cdot 360°}{N}$ relativ zu einer ersten Fläche des mindestens einen Körpers und mit einem unterschiedlichen Wert für *n* angeordnet ist, wobein eine natürliche Zahl ist, die einen Wert im Bereich von 0 bis N-1 annimmt, und N gleich der Anzahl der Dehnungsmesssensoren in der ersten Vielzahl ist.

7. Die Sensorvorrichtung nach einem der vorstehenden Ansprüche, wobei:

der mindestens eine Körper (10) ein einzelner Körper ist, der eine Kavität oder eine Durchgangsbohrung (12) aufweist, die die Sensorvorrichtung hohl macht, oder der mindestens eine Körper eine Vielzahl von Körpern aufweist, die so mit ihm gekoppelt sind, dass eine Kavität oder eine Durchgangsbohrung (12) gebildet wird, die die Sensorvorrichtung hohl macht; der mindestens eine Körper (10) eine Vielzahl von Kanälen (13), die an einem äußeren Teil des mindestens einen Körpers geformt sind, aufweist, wobei jeder Kanal zwischen zwei Außenflächen (11) des mindestens einen Körpers geformt ist; die eine oder mehreren elektronischen Vorrichtungen (25, 210a-210n, 213) in die Kavität oder die Durchgangsbohrung des mindestens einen Körpers eingeführt sind; die Dehnungsmesssensoren (20) jeder Vielzahl auf einer oder mehreren Außenflächen (11) des mindestens einen Körpers angeordnet sind; und jeder Dehnungsmesssensor ein oder mehrere Kabel (15) aufweist, wobei sich jedes der einen oder mehreren Kabel jedes Dehnungsmesssensors zwischen den einen oder mehreren elektronischen Vorrichtungen und dem jeweiligen Dehnungsmesssensor erstreckt, wobei sich ein Abschnitt des Kabels durch einen Kanal der Vielzahl von Kanälen erstreckt.

8. Verschleißelementbaugruppe für Grabwerkzeuge einer Erdbewegungsmaschine, aufweisend:

ein Verschleißelement (100) mit einer Kavität (52, 53), wobei das Verschleißelement zumindest zum Koppeln mit den Grabwerkzeugen und/oder einem anderen Verschleißelement für Grabwerkzeuge ausgebildet ist; und eine Sensorvorrichtung (1-6) gemäß einem der vorstehenden Ansprüche; und Mittel zum Befestigen (16, 55) der Sensorvorrichtung an einer Innenseite der Kavität.

9. Die Verschleißelementbaugruppe nach Anspruch 8, wobei der mindestens eine Körper (10) aus 30CrNi-Mo8 oder 42CrMo4 ausgebildet ist.

10. Verschleißelementbaugruppe nach einem der Ansprüche 8 bis 9, wobei die Befestigungsmittel (16, 55) eine Vielzahl von Schweißnähten (15) zwischen dem mindestens einen Körper (10) der Sensorvorrichtung und der Kavität (12, 13) des Verschleißelements (100) aufweisen.

11. Die Verschleißelementbaugruppe nach Anspruch 10, wobei die Vielzahl der Schweißnähte (16) vier Schweißnähte aufweist, wobei jede Schweißnaht an einer anderen Ecke des mindestens einen Körpers (10) angeordnet ist, und wobei eine Summe der Dicken ($S_W$) der vier Schweißnähte größer ist als eine Dicke ($S_D$) des mindestens einen Körpers der Sensorvorrichtung an einem mittigsten Teil davon.

**12.** Die Verschleißelementbaugruppe nach einem der Ansprüche 10 bis 11, wobei:

die Sensorvorrichtung ferner eine Abdeckung (19), die Stahlmaterial umfasst, aufweist, wobei die Abdeckung mit dem mindestens einen Körper (10) oder dem Verschleißelement so verbunden ist, dass zwischen der Abdeckung und dem mindestens einen Körper (10) eine Kavität gebildet ist;

der mindestens eine Körper der Sensorvorrichtung ist ein einzelner Körper, der mit der Kavität (52, 53) des Verschleißelements (100) in Kontakt steht;

die eine oder mehreren elektronischen Vorrichtungen (25, 210a-210n, 213) in der zwischen der Abdeckung und dem mindestens einen Körper gebildeten Kavität eingebracht sind; und

die Dehnungsmesssensoren (20) jeder Vielzahl sind auf einer oder mehreren Außenflächen (11) des mindestens einen Körpers angeordnet.

**13.** Die Verschleißelementbaugruppe nach Anspruch 12, wobei die Abdeckung (19) eine solche Geometrie aufweist, dass sie, wenn die Abdeckung mit dem mindestens einen Körper (10) oder dem Verschleißelement (100) gekoppelt ist, einige oder alle Dehnungsmesssensoren (20) jeder Vielzahl zum Schutz derselben abdeckt.

**14.** Die Verschleißelementbaugruppe nach Anspruch 8, wobei die Befestigungsmittel (16, 55) ein Material (16) aufweisen, das die Kavität (52, 53) zumindest teilweise ausfüllt, wobei die Sensorvorrichtung in die Kavität eingeführt ist.

**15.** Die Verschleißelementbaugruppe nach einem der Ansprüche 8 bis 14, wobei die Kavität (52) benachbart zu einer Öffnung oder einer Durchgangsbohrung ausgebildet ist, die zur Aufnahme von Fixiermitteln zum Befestigen des Verschleißelements an einem anderen Verschleißelement ausgelegt ist, und die Kavität (52) parallel zu der Öffnung oder der Durchgangsbohrung für Fixiermittel ist.

**16.** Verfahren, aufweisend:

Einführen einer Sensorvorrichtung (1-6) in eine Kavität (52, 53) eines Verschleißelements (100) für Grabwerkzeuge einer Erdbewegungsmaschine;

Anordnen einer ersten Vielzahl von Dehnungsmesssensoren (20) an einem oder mehreren Körpern mindestens eines Körpers (10) der Sensorvorrichtung, wobei die erste Vielzahl mindestens vier Dehnungsmesssensoren (20) umfasst;

Befestigen der Sensorvorrichtung an der Kavität, wenn die Sensorvorrichtung in diese eingeführt wird;

Messen von Dehnungen an dem mindestens einen Körper (10) mit den Dehnungsmesssensoren der ersten Vielzahl; und

Bereitstellen von Kraftwerten in den mindestens zwei verschiedenen Achsen (X, Y, Y') mit einer oder mehreren ersten elektronischen Vorrichtungen, wobei der Kraftwert in jeder Achse auf der Grundlage von Messungen von zwei verschiedenen Dehnungsmesssensoren der ersten Vielzahl bereitgestellt wird.

**17.** Das Verfahren nach Anspruch 16, das ferner aufweist: Bereitstellen von Kraftwerten in den mindestens zwei verschiedenen Achsen (X, Y, Y') mit einer oder mehreren zweiten elektronischen Vorrichtungen (210a-210n, 213), wobei der Kraftwert in jeder Achse auf der Grundlage der Unterschiede zwischen den Messungen der beiden verschiedenen Dehnungsmesssensoren (20) bereitgestellt wird.

**18.** Das Verfahren nach einem der Ansprüche 16-17, wobei die ersten elektronischen Vorrichtungen von der Sensorvorrichtung (1-6) entfernt sind.

**19.** Das Verfahren nach einem der Ansprüche 16 bis 18, wobei die Sensorvorrichtung (1-6) eine Sensorvorrichtung nach einem der Ansprüche 1 bis 7 ist.

**20.** Das Verfahren nach einem der Ansprüche 16 bis 19, das ferner aufweist:

Koppeln einer Abdeckung (19), die Stahlmaterial umfasst, an dem mindestens einen Körper (10) oder dem Verschleißelement (100), so dass zwischen der Abdeckung und dem mindestens einen Körper eine Kavität gebildet wird, wobei der mindestens eine Körper ein einzelner Körper ist, der die Kavität (52, 53) kontaktiert; und

Einführen der einen oder mehreren elektronischen Vorrichtungen (25, 210a-210n, 213) in die zwischen der Abdeckung und dem mindestens einen Körper gebildete Kavität; und

wobei in dem Schritt des Anordnens der Dehnungsmesssensoren (20) der ersten Vielzahl die Dehnungsmesssensoren auf einer oder mehreren Außenflächen (11) des mindestens einen Körpers angeordnet werden.

**21.** Verschleißelement (100) für Grabwerkzeuge einer Erdbewegungsmaschine, aufweisend:

eine oder mehrere Kavitäten (52, 53);

eine erste Vielzahl von Dehnungsmesssensoren (20), wobei jeder Sensor in einer Kavität der einen oder mehreren Kavitäten angeordnet ist, wobei die erste Vielzahl mindestens vier Dehnungsmesssensoren umfasst, wobei die Anordnung der ersten Vielzahl von Sensoren zum Messen von Dehnungen dient, die die Bereitstellung von Kraftwerten in mindestens zwei verschiedenen Achsen (X, Y, Y') ermöglichen; Mittel zum Befestigen (16, 55) jedes Dehnungsmesssensors der ersten Vielzahl an der jeweiligen Kavität; und

eine oder mehrere elektronische Vorrichtungen (210a-210n, 213), die dazu ausgebildet sind, für mindestens zwei verschiedene Achsen eine Differenz zwischen den Messungen von zwei verschiedenen Dehnungsmesssensoren (20) der ersten Vielzahl für jede Achse der mindestens zwei verschiedenen Achsen (X, Y, Y') bereitzustellen.

**22.** Das Verschleißelement nach Anspruch 21, wobei die eine oder mehreren elektronischen Vorrichtungen (210a-210n, 213) dazu ausgebildet sind, Kraftwerte in mindestens zwei verschiedenen Achsen (X, Y, Y') zu liefern, wobei der Kraftwert in jeder Achse auf der Grundlage der Unterschiede zwischen den Messungen der beiden verschiedenen Dehnungsmesssensoren (20) bereitgestellt wird.

**23.** Erdbewegungsmaschine, die folgende Eigenschaften aufweist:

Grabwerkzeuge; und
eine oder mehrere Sensorvorrichtungen gemäß einem der Ansprüche 1 bis 7 und/oder eine oder mehrere Verschleißelementbaugruppen gemäß einem der Ansprüche 8 bis 15; oder
ein oder mehrere Verschleißelemente gemäß einem der Ansprüche 21-22.

**Revendications**

**1.** Dispositif capteur (1-6) pour une machine de terrassement, comprenant : au moins un corps (10) ; une première pluralité de capteurs de mesure de déformation (20) agencés sur un ou plusieurs corps parmi l'au moins un corps de sorte que la première pluralité de capteurs mesure des déformations qui permettent la fourniture de valeurs de force dans au moins deux axes (X, Y, Y') différents, où la première pluralité inclut au moins quatre capteurs de mesure de déformation (20) ; **caractérisé par** un ou plusieurs dispositifs électroniques (210a-210n, 213) configurés pour fournir, pour au moins deux axes (X, Y, Y') différents, une différence entre des mesures de deux capteurs de mesure de déformation différents de la première pluralité pour chaque axe parmi les au moins deux axes différents.

**2.** Dispositif capteur selon la revendication 1, dans lequel les au moins deux axes différents comprennent des premier, deuxième et troisième axes (X, Y, Y', Z, Z'), les un ou plusieurs dispositifs électroniques (210a-210n, 213) sont configurés pour fournir une mesure combinée d'une partie ou de la totalité des capteurs de mesure de déformation (20) de la première pluralité pour le troisième axe (Z, Z').

**3.** Dispositif capteur selon l'une quelconque des revendications précédentes, dans lequel les un ou plusieurs dispositifs électroniques (210a-210n, 213) sont configurés pour fournir des valeurs de force dans les au moins deux axes (X, Y, Y') différents, où la valeur de force dans chaque axe est fournie sur la base de la différence des mesures pour chaque axe.

**4.** Dispositif capteur selon l'une quelconque des revendications précédentes, comprenant en outre un couvercle (60) ou un cache (19) couplé avec un corps parmi l'au moins un corps (10) ou qui est apte à être couplé avec un élément d'usure sur lequel le dispositif capteur doit être agencé, de telle sorte qu'une cavité est formée entre le corps et le couvercle (60) ou cache (19), et les un ou plusieurs dispositifs électroniques (210a-210n, 213) sont introduits dans ladite cavité.

**5.** Dispositif capteur selon l'une quelconque des revendications précédentes, dans lequel l'au moins un corps (10) inclut des bords conçus pour le rattachement du dispositif capteur à une cavité d'un élément d'usure par soudage.

**6.** Dispositif capteur selon l'une quelconque des revendications précédentes, dans lequel chacun des capteurs de mesure de déformation (20) de la première pluralité est agencé sur un corps parmi l'au moins un corps (10) avec une orientation de $\alpha = \frac{n \cdot 360°}{N}$ par rapport à une première face de l'au moins un corps et avec une valeur différente pour *n*, où n est un nombre entier naturel prenant une valeur allant de 0 à N-1, et N étant égal au nombre de capteurs de mesure de déformation dans la première pluralité.

**7.** Dispositif capteur selon l'une quelconque des revendications précédentes, dans lequel :

l'au moins un corps (10) est un corps unique comprenant une cavité ou un trou traversant (12) qui rend le dispositif capteur creux ou l'au moins un corps comprend une pluralité de corps couplés avec celui-ci de telle sorte qu'une cavité est formée ou un trou traversant (12) est formé qui rend le dispositif capteur creux ;

l'au moins un corps (10) comprend une pluralité de canaux (13) formés sur une partie externe de l'au moins un corps, chaque canal étant formé entre deux faces externes (11) de l'au moins un corps ;

les un ou plusieurs dispositifs électroniques (25, 210a-210n, 213) sont introduits dans la cavité ou le trou traversant de l'au moins un corps ;

les capteurs de mesure de déformation (20) de chaque pluralité sont agencés sur une ou plusieurs faces externes (11) de l'au moins un corps ; et

chaque capteur de mesure de déformation comprenant un ou plusieurs câbles (15), chacun parmi les un ou plusieurs câbles de chaque capteur de mesure de déformation s'étendant entre les un ou plusieurs dispositifs électroniques et le capteur de mesure de déformation respectif avec une portion du câble s'étendant à travers un canal de la pluralité de canaux.

**8.** Ensemble élément d'usure pour outils d'excavation d'un machine de terrassement, comprenant :

un élément d'usure (100) comprenant une cavité (52, 53), l'élément d'usure étant au moins conçu pour un couplage avec les outils d'excavation et/ou un autre élément d'usure pour outils d'excavation ; et

un dispositif capteur (1-6) selon l'une quelconque des revendications précédentes ; et

des moyens de rattachement (16, 55) du dispositif capteur à un intérieur de la cavité.

**9.** Ensemble élément d'usure selon la revendication 8, dans lequel l'au moins un corps (10) est en 30CrNi-Mo8 ou 42CrMo4.

**10.** Ensemble élément d'usure selon l'une quelconque des revendications 8 à 9, dans lequel les moyens de rattachement (16, 55) comprennent une pluralité de cordons de soudure (15) entre l'au moins un corps (10) du dispositif capteur et la cavité (12, 13) de l'élément d'usure (100).

**11.** Ensemble élément d'usure selon la revendication 10, dans lequel la pluralité de cordons de soudure (16) comprend quatre cordons de soudure, chaque cordon de soudure étant agencé sur un coin différent de l'au moins un corps (10), et dans lequel une somme d'épaisseurs ($S_W$) des quatre cordons de soudure est supérieure à une épaisseur ($S_D$) de l'au moins un corps du dispositif capteur sur une partie la plus centrale de celui-ci.

**12.** Ensemble élément d'usure selon l'une quelconque des revendications 10 à 11, dans lequel :

le dispositif capteur comprend en outre un cache (19) comprenant un matériau en acier, le cache étant couplé avec l'au moins un corps (10) ou l'élément d'usure de telle sorte qu'une cavité est formée entre le cache et l'au moins un corps (10) ;

l'au moins un corps du dispositif capteur est un corps unique en contact avec la cavité (52, 53) de l'élément d'usure (100) ;

les un ou plusieurs dispositifs électroniques (25, 210a-210n, 213) sont introduits dans la cavité formée entre le cache et l'au moins un corps ; et

les capteurs de mesure de déformation (20) de chaque pluralité sont agencés sur une ou plusieurs faces externes (11) de l'au moins un corps.

**13.** Ensemble élément d'usure selon la revendication 12, dans lequel le cache (19) possède une géométrie telle que, lorsque le cache est couplé avec l'au moins un corps (10) ou l'élément d'usure (100), il recouvre une partie ou de la totalité des capteurs de mesure de déformation (20) de chaque pluralité pour la protection de ceux-ci.

**14.** Ensemble élément d'usure selon la revendication 8, dans lequel les moyens de rattachement (16, 55) comprennent un matériau (16) remplissant au moins partiellement la cavité (52, 53) avec le dispositif capteur introduit dans la cavité.

**15.** Ensemble élément d'usure selon l'une quelconque des revendications 8 à 14, dans lequel la cavité (52) est formée de manière adjacente à un trou ou trou traversant conçu pour recevoir des moyens de fixation pour le rattachement de l'élément d'usure à un autre élément d'usure, et la cavité (52) est parallèle au trou ou trou traversant pour les moyens de fixation.

**16.** Procédé comprenant les étapes consistant à :

introduire un dispositif capteur (1-6) à l'intérieur d'une cavité (52, 53) d'un élément d'usure (100) pour outils d'excavation d'une machine de terrassement ;

agencer une première pluralité de capteurs de mesure de déformation (20) sur un ou plusieurs corps parmi au moins un corps (10) du dispositif capteur, où la première pluralité inclut au moins quatre capteurs de mesure de déformation (20) ;

rattacher le dispositif capteur à la cavité lorsque le dispositif capteur est introduit dans celle-ci ;

mesurer des déformations sur l'au moins un corps (10) avec les capteurs de mesure de déformation de la première pluralité ; et

fournir, avec un ou plusieurs premiers dispositifs électroniques, des valeurs de force dans les au moins deux axes (X, Y, Y') différents, où la valeur de force dans chaque axe est fournie sur la base de mesures de deux capteurs de mesure de déformation différents de la première pluralité.

17. Procédé selon la revendication 16, comprenant en outre l'étape consistant à fournir, avec un ou plusieurs seconds dispositifs électroniques (210a-210n, 213), des valeurs de force dans les au moins deux axes (X, Y, Y') différents, où la valeur de force dans chaque axe est fournie sur la base des différences entre les mesures des deux capteurs de mesure de déformation (20) différents.

18. Procédé selon l'une quelconque des revendications 16 à 17, dans lequel les premiers dispositifs électroniques sont distants du dispositif capteur (1-6).

19. Procédé selon l'une quelconque des revendications 16 à 18, dans lequel le dispositif capteur (1-6) est un dispositif capteur selon l'une quelconque des revendications 1 à 7.

20. Procédé selon l'une quelconque des revendications 16 à 19, comprenant en outre les étapes consistant à :

coupler un cache (19) incluant un matériau en acier sur l'au moins un corps (10) ou l'élément d'usure (100) de telle sorte qu'une cavité est formée entre le cache et l'au moins un corps, l'au moins un corps est un corps unique en contact avec la cavité (52, 53) ; et
introduire les un ou plusieurs dispositifs électroniques (25, 210a-210n, 213) dans la cavité formée entre le cache et l'au moins un corps ; et
dans lequel, à l'étape consistant à agencer les capteurs de mesure de déformation (20) de la première pluralité, les capteurs de mesure de déformation sont agencés sur une ou plusieurs faces externes (11) de l'au moins un corps.

21. Élément d'usure (100) pour outils d'excavation d'une machine de terrassement, comprenant :

une ou plusieurs cavités (52, 53) ;
une première pluralité de capteurs de mesure de déformation (20), chaque capteur étant agencé dans une cavité parmi les une ou plusieurs cavités, où la première pluralité inclut au moins quatre capteurs de mesure de déformation, l'agencement de la première pluralité de capteurs permettant la mesure de déformations qui permettent la fourniture de valeurs de force dans au moins deux axes (X, Y, Y') différents ;
des moyens de rattachement (16, 55) de chaque capteur de mesure de déformation de la première pluralité à la cavité respective ; et
un ou plusieurs dispositifs électroniques (210a-210n, 213) configurés pour fournir, pour au moins deux axes différents, une différence entre des mesures de deux capteurs de mesure de déformation (20) différents de la première pluralité pour chaque axe parmi les au moins deux axes (X, Y, Y') différents.

22. Élément d'usure selon la revendication 21, dans lequel les un ou plusieurs dispositifs électroniques (210a-210n, 213) sont configurés pour fournir des valeurs de force dans au moins deux axes (X, Y, Y') différents, où la valeur de force dans chaque axe est fournie sur la base des différences entre les mesures des deux capteurs de mesure de déformation (20) différents.

23. Machine de terrassement comprenant :

des outils d'excavation ; et
un ou plusieurs dispositifs capteurs selon l'une quelconque des revendications 1 à 7 et/ou un ou plusieurs ensembles élément d'usure selon l'une quelconque des revendications 8 à 15 ; ou un ou plusieurs éléments d'usure selon l'une quelconque des revendications 21 à 22.

Y
Z
X

1
25
10
11
14
20
12
13
15
11

**FIG. 1A**

Y
Z
X
13
1
10
12
15
25

**FIG. 1B**

11
10
14
20
2
13
12
11

Y
Z
X

**FIG. 2**

FIG. 3

FIG. 4

**FIG. 5A**

**FIG. 5B**

**FIG. 6**

FIG. 7

FIG. 8

**FIG. 9**

**FIG. 10**

FIG. 11

FIG. 12

**FIG. 13**

**FIG. 14**

**FIG. 15**

**FIG. 16**

UP & DOWN SENSOR

**FIG. 17A**

LEFT & RIGHT SENSOR

**FIG. 17B**

## UP & DOWN SENSOR

**FIG. 18A**

## LEFT & RIGHT SENSOR

**FIG. 18B**

**FIG. 19A**

**FIG. 19B**

**FIG. 20**

**FIG. 21**

**FIG. 22**

**FIG. 23**

**FIG. 24**

**FIG. 25**

**FIG. 26**

**FIG. 27**

FIG. 28

FIG. 29

**FIG. 30**

**FIG. 31**

**FIG. 32**

**FIG. 33**

FIG. 34

FIG. 35

FIG. 36

FIG. 37

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GRUENBAUM P et al.** *TRIAXIALE MESSUNG DER SCHNEIDKRAEFTE AN DEN ZAEHNEN EINES SCHAUFELRADBAGGERS, MESSEN UND PRU-FEN, IVA INTERNATIONAL*, 01 April 1990, vol. 26, 175-180